(19) **Europäisches Patentamt / European Patent Office / Office européen des brevets**

(11) **EP 1 988 454 A1**

(12) # EUROPEAN PATENT APPLICATION

(43) Date of publication:
**05.11.2008 Bulletin 2008/45**

(51) Int Cl.:
*G06F 9/44* (2006.01)

(21) Application number: **08151726.0**

(22) Date of filing: **21.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.03.2007 JP 2007086648**
**28.09.2007 JP 2007254920**

(71) Applicant: **HITACHI SOFTWARE ENGINEERING CO., LTD.**
**Shinagawa-ku**
**140-0002 Tokyo (JP)**

(72) Inventors:
• **Fukuda, Hidenori**
  **Intellectual Property Center**
  **Hitachi Software Engineering, Ltd**
  **Tokyo 140-0002 (JP)**
• **Sakamoto, Koichi**
  **c/o Hitachi Software Engineering Co., Ltd.**
  **Tokyo 140-0002 (JP)**

(74) Representative: **Liesegang, Eva**
  **Forrester & Boehmert**
  **Pettenkoferstrasse 20-22**
  **80336 München (DE)**

(54) **Source code generating device**

(57) It is an object of this invention to improve the efficiency in software development, modification, and maintenance by efficiently designing a user interface with designs which differ among a plurality of exec.ution environments and efficiently outputting source code and GUI display data from the editing result, in a source code generating device for generating source code and GUI display data for displaying a GUI. Positions, sizes, component attributes, and event actions which differ among execution environments are managed for each of user interface components and are allowed to be independently edited. With this configuration, a piece of information which varies according to execution environment and a piece of information common to execution environments are edited, and pieces of source code and pieces of GUI display data for a plurality of execution environments are generated.

EP 1 988 454 A1

## Description

BACKGROUND OF THE INVENTION

Field of the Invention

The present invention relates to a source code generating device for generating the source code of a program to be executed by a computer mounted in a cellular phone handset or the like and, more particularly, to a source code generating device for generating source code for generating GUI display data by editing a screen design corresponding to each of a plurality of different execution environments for the computer and displaying a GUI display screen using the GUI display data.

Background Art

A large number of graphical user interface (GUI) libraries for building a screen as a combination of standard user interface components have conventionally been developed and provided to efficiently create a user interface part for general purpose use in program development work.

Methods of operation of a GUI library include a method in which display contents are statically determined by an argument (parameter) used when a GUI library is called from a program and a method in which display contents are dynamically determined at the time of execution by a GUI library's reading a data file called a resource file or the like storing GUI settings while a program for calling the GUI library is in action. There are also GUI libraries which adopt both methods.

As for a GUI library which statically sets display contents, GUI-related setting values are described in source code of a caller program. In contrast, as for a GUI library which dynamically sets display contents, GUI-related setting values are recorded in a resource file.

A GUI design development tool for designing a user interface part by arranging a GUI component on a screen while previewing an actual GUI display image is used to improve the productivity of the work of developing a display screen in programs using the above-described GUI libraries.

Such a GUI design development tool automatically outputs the source code of a program calling a library or a resource file read by the library at the time of calling from an editing result, thereby reflecting edits in program screen display.

In a program development project, an environment for screen display often varies according to base hardware, operating system, runtime platform, setting values at the time of execution, or the like. Examples of such a case include a case where a single program is executed on pieces of hardware with different screen sizes, a case where GUI libraries serving as runtime platforms are different in version and the presence or absence of optional facilities, and a case where a display facility is changed by user setting.

To develop a program supporting various types of display environments, it is necessary for the prior art to make a plurality of GUI designs which differ among environments for one screen. This is because if pieces of hardware have different screen sizes, a small-size screen requires changes such as arrangement of a user interface component within a narrow range, setting of the size of a user interface component to be small, and shortening of a message to be displayed.

Even if a screen size does not change, display in portrait and landscape orientations may be needed depending on hardware configuration. In this case, it is also necessary to lay out each component again to suit a screen in portrait or landscape orientation. This has been a heavy burden to developers of a program with many screens or a program for displaying a complicated screen.

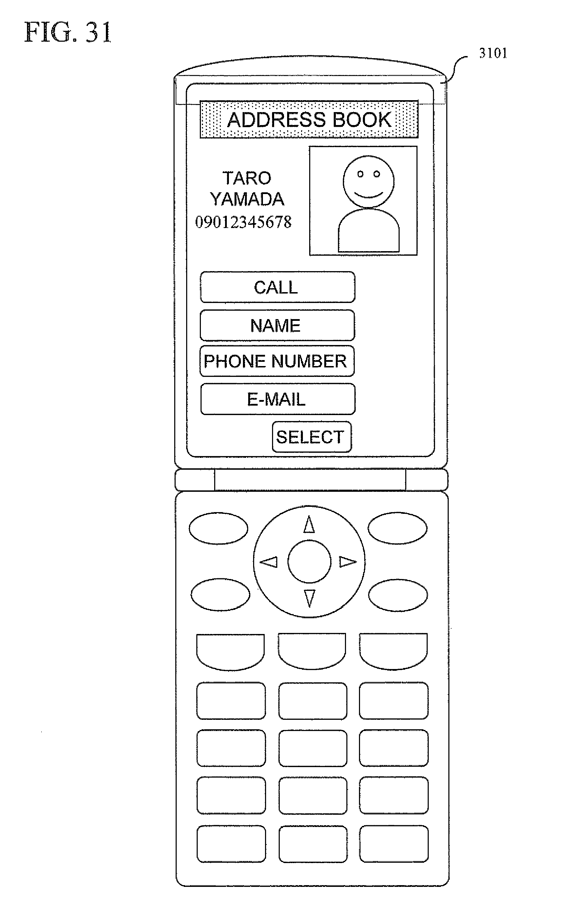

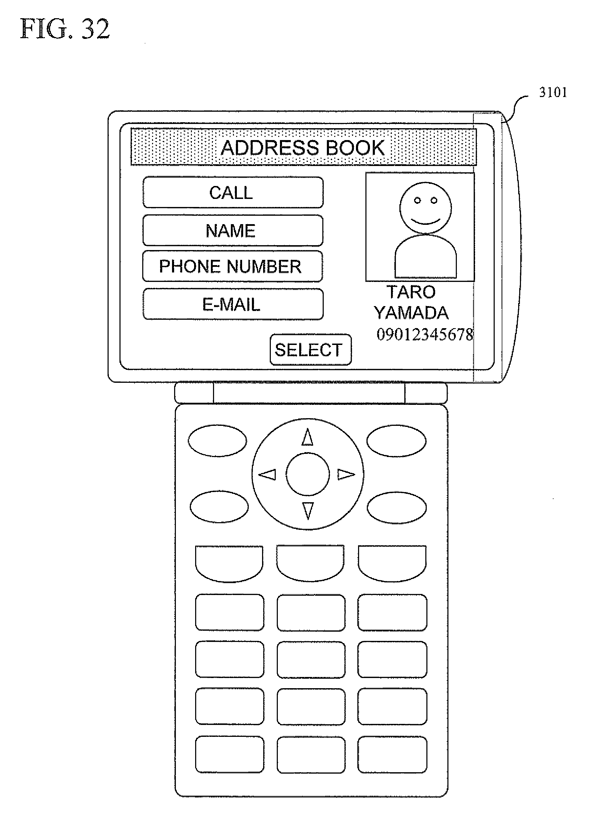

Examples of a cellular phone handset 3101 having a display screen as shown in FIG. 31 include a model which can be used in both portrait and landscape orientations by rotating a screen to landscape orientation, as shown in FIG. 32. The cellular phone handset 3101, whose screen changes in the above-described manner, requires designs for both portrait- and landscape-oriented screens. Although these screens have constituent components such as a picture and a Send button in common, the position and size of each component varies according to screen orientation. As described above, even if a plurality of screens have many parts in common, it is necessary for a conventional design method to make a design of each screen for each of execution environments.

A part of operation may need to be changed depending on execution environment. For example, in a program in which the input focus moves among user interface components arranged on a screen by operation of arrow keys, the focus is often moved according to rules (e.g., in order of upper left to lower right). At this time, if the program is a program in which the layout of components changes depending on the screen orientation, focus movement order needs to be changed to standardize operability. Also in this case, it is necessary to prepare a process of controlling focus depending on the layout of components, and complicated processing logic is required.

To cope with the above-described problems, some advanced GUI libraries automatically calculate the position information of each component and rearrange the component if screen size setting is changed. These GUI libraries are provided with a facility to specify the position of a component by not only a fixed value such as x and y coordinates but also a distance from the left edge of a screen and a relative position with respect to a specific component and a facility to specify the size of a component by the ratio of the component to the screen. The GUI libraries automatically change the position of each component even when called with different screen sizes and support a wide variety of screen sizes with setting values for one GUI design.

In program development; editing of a GUI design often proceeds while checking the actual operating state of a program. More specifically, the result of editing a GUI design is checked by executing a program in an actual environment or on a virtual machine called a simulator or emulator.

A combination of a GUI design development tool, a library provided with a component rearranging facility, and an environment for which program execution is to be checked makes it possible to develop a GUI design while checking display in a plurality of screen layouts.

Since one program can be executed in a plurality of environments by switching execution environment settings or switching an execution environment platform, it is possible to edit a GUI design while switching the operating condition in each execution environment. Output of source code for calling a GUI library or GUI display data from the editing result makes it possible to efficiently proceed with development work.

GUI display data refers to data, except for source code, including pieces of GUI display control information such as XML data, binary data, and text data used by a GUI library to arrange a component to be displayed, set attributes such as a color, text, and image, and determine an event action when it is called.

Examples of a known document about the above-described techniques include JP Patent Publication (Kokai) No. 10-228372 A (1998), in which automatic GUI layout is allowed by combining a GUI display program capable of automatically changing the position and size of a displayed component and layout information defined in a format file.

SUMMARY OF THE INVENTION

To develop a GUI design which can be shared by a plurality of execution environments in the GUI design development of a program using a GUI library, it is necessary to make a plurality of screen designs corresponding in number to the environments or to use a library supporting automatic rearrangement. In a program which performs a process which varies according to execution environment, logic for determining an environment and performing a separate process specific to the environment needs to be developed.

If GUI designs corresponding in number to execution environments are made, not only the effort of making GUI designs increases developer's work but also much effort is required for GUI design change.

Even when screens share user interface components and facilities, a large number of GUI designs needs to be made if each user interface component is different in position and size among the screens. The work of checking that source code or GUI display data generated from a design result works as expected needs to be performed a plurality of times corresponding in number to execution environments.

As for the work of adding a new component to a screen, it is necessary to perform adding work for each of a plurality of GUI designs and appropriately manage the GUI designs.

Since a plurality of pieces of GUI design information indicating a single screen often do not work in conjunction with one another on a tool, they must be manually managed using a screen name, comment, and the like. This degrades the efficiency in maintenance and enhancement and tends to cause errors.

A method using a GUI library supporting automatic rearrangement can select only a layout which can be set by the GUI library.

For example, if a GUI library which can set the horizontal size of a user interface component in two ways, using a "fixed value" or "the ratio to a screen width", is used, the GUI library cannot be applied to any program other than a program in which the ratio of the horizontal size of each user component to the screen width may be set to be constant in all execution environments. For example, assume that there are execution environments whose horizontal screen sizes range from 200 to 1,600 pixels. In this case, in a screen equal to or larger than a certain size, the width of the screen is too large for a user component with a horizontal size, the ratio of which to the screen width is fixed, and much space is left around the user component. In contrast, in a small screen, the width of the screen is too small, and the whole information cannot be displayed.

Although a process of using a fixed value as a horizontal size if a screen size falls outside a certain range is generally added as a process for coping with a special screen size, the process requires source code incorporating a process of switching between a fixed value and a variable value. Accordingly, it is impossible to associate a screen design and source code on a tool, and factors such as a component size and screen pattern make complicated maintenance necessary.

The same applies to a case where a process to be performed is switched depending on the execution environment. Since a GUI design and source code are not automatically associated with each other on a tool, it is necessary to manually manage the association between an execution environment and process logic using a specification or comments in source code.

If addition of a component, change of a screen size, or the like occurs, the amount of work for identifying a range affected by screen design change and appropriately modifying source code is large, and the efficiency in maintenance and enhancement is degraded.

The present invention has been made in consideration of the above-described problems, and has as its object to provide a source code generating device which improves the efficiency in development, modification, and maintenance work on a program including GUI display data by efficiently designing a user interface with designs which differ among a plurality of execution environments and efficiently outputting pieces of GUI display data and pieces of source code which differ among the execution environments.

In order to achieve the above-described object, according to the present invention, there is provided a source code generating device for generating source code of a program to be executed by a computer and GUI display data for displaying a user interface component on a display screen, comprising storing means for independently editing pieces of component element information, including positions, sizes, component attributes, and event actions which differ among execution environments, of each of user interface components and storing the pieces of component element information in association with a plurality of pieces of execution environment information and source code and GUI display data generating means for generating GUI display data for the user interface components corresponding to a designated one of the execution environments based on the stored pieces of component element information and source code for displaying the user interface components using the GUI display data and outputting the GUI display data and source code.

The source code generating device further comprises means for previewing the user interface components on an editing screen using the GUI display data.

The source code generating device further comprises means for excluding at least one of the user interface components from a list of objects for which one of source code and GUI display data is to be output, depending on execution environment.

A source code generating device according to the present invention has the following advantages:

(1) if there are a plurality of execution environments for which source code and GUI display data output by the source code generating device work, it is possible to edit and generate source code and GUI display data of a program with an optimum screen design for each of the execution environments by separately designating and editing pieces of component element information, including positions, sizes, attributes, and event actions which differ among the execution environments for one screen design;

(2) in the GUI design development of a program, work required to check the actual operation of the program can be reduced by previewing and checking design results and event actions corresponding to a plurality of execution environments in one screen on the source code generating device at the time of design; and

(3) if some of user interface components become unnecessary in a specific one of a plurality of execution environments, it is possible to automatically perform description of a process required for user interface component control and GUI design-linked management by making a GUI design with the unnecessary user interface components deleted and generating source code or GUI display data.

BRIEF DESCRIPTION OF THE DRAWINGS

FIG. 1 is a system configuration diagram showing an embodiment of the present invention;

FIG. 2 is a functional block diagram showing facilities and pieces of processing data of a source code program according to the embodiment of the present invention;

FIG. 3 is an explanatory view showing an example of an operation screen;

FIG. 4 shows explanatory charts showing examples of an environment table and component table and the association between the tables;

FIG. 5 shows explanatory charts showing addition of an execution environment to the environment table and component table;

FIG. 6 is an explanatory chart showing an example of a screen table;

FIG. 7 is an explanatory chart showing an example of a prototype table;

FIG. 8 is an explanatory chart showing an example of a resource table;

FIG. 9 is an explanatory chart showing an example of a material table;

FIG. 10 is an explanatory diagram showing the flow of a process at system start-up;

FIG. 11 is an explanatory diagram showing the flow of a GUI design process;

FIG. 12 is an explanatory view showing an example of an execution environment switching operation;

FIG. 13 is an explanatory view showing an example of an operation when designing a screen for an execution environment based on a screen designed for another execution environment;

FIG. 14 is an explanatory chart showing the flow of an execution environment switching process;

FIG. 15 is an explanatory diagram showing the flow of a source code generating process;

FIG. 16 is an explanatory view showing an example of generated source code;

FIG. 17 is an explanatory view showing an example of generated GUI display data;

FIG. 18 is a flow chart showing processing by the function main() for performing a top-level process in the embodiment of the present invention;

FIG. 19 is a flow chart showing processing by the function initialize() for performing an initial process in the embodiment of the present invention;

FIG. 20 is a flow chart showing processing by the function new_screen() for performing a new screen creating process in the embodiment of the present invention;

FIG. 21 is a flow chart showing processing by the function new_component() for performing a process of adding a component to a GUI editing window in the embodiment of the present invention;

FIG. 22 is a flow chart showing processing by the function handle_gui() for performing a GUI editing process in the embodiment of the present invention;

FIG. 23 is a flow chart showing processing by the function handle_property() for performing an attribute editing process in the embodiment of the present invention;

FIG. 24 is a flow chart showing processing by the function handle_action() for performing an event editing process in the embodiment of the present invention;

FIG. 25 is a flow chart showing processing by the function handle_resource() for performing a resource editing process in the embodiment of the present invention;

FIG. 26 is a flow chart showing processing by the function handle_environment() for performing an execution environment editing process in the embodiment of the present invention;

FIG. 27 is a flow chart showing processing by the function generate_source() for performing a source generating process in the embodiment of the present invention;

FIG. 28 is a flow chart showing processing by the function redraw() for performing an editing screen drawing process in the embodiment of the present invention;

FIG. 29 is a flow chart showing processing by the function generate_source(screen) for performing a source code generating process in the embodiment of the present invention;

FIG. 30 is a flow chart showing processing by the function preview(screen, env) for generating a preview screen showing the display state of a component arranged on a screen in the embodiment of the present invention;

FIG. 31 is an external view showing an example of a cellular phone handset having a display screen which can be used in both portrait and landscape orientations; and

FIG. 32 is an external view showing the example of a cellular phone handset having a display screen which can be used in both portrait and landscape orientations.

DETAILED DESCRIPTION OF THE PREFERRED EMBODIMENTS

An embodiment of a source code generating device for making GUI designs corresponding to a plurality of execution environments to which the present invention is applied will be described below.

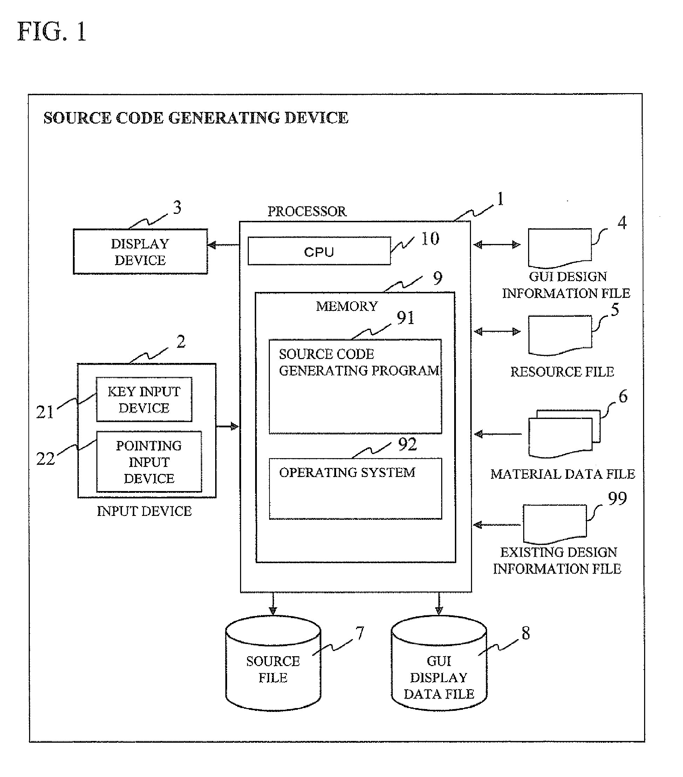

FIG. 1 is a system configuration diagram showing an embodiment of the present invention.

A source code generating device according to this embodiment is composed of a processor 1, an input device 2, a display device 3, a GUI design information file 4, a resource file 5, a plurality of material data files 6, a source file 7, a GUI display data file 8, a memory 9, a CPU 10, and an existing design information file 99. The input device 2 is composed of a key input device 21 and a pointing input device 22. A source code generating program 91 and an operating system 92 are executed in the memory 9.

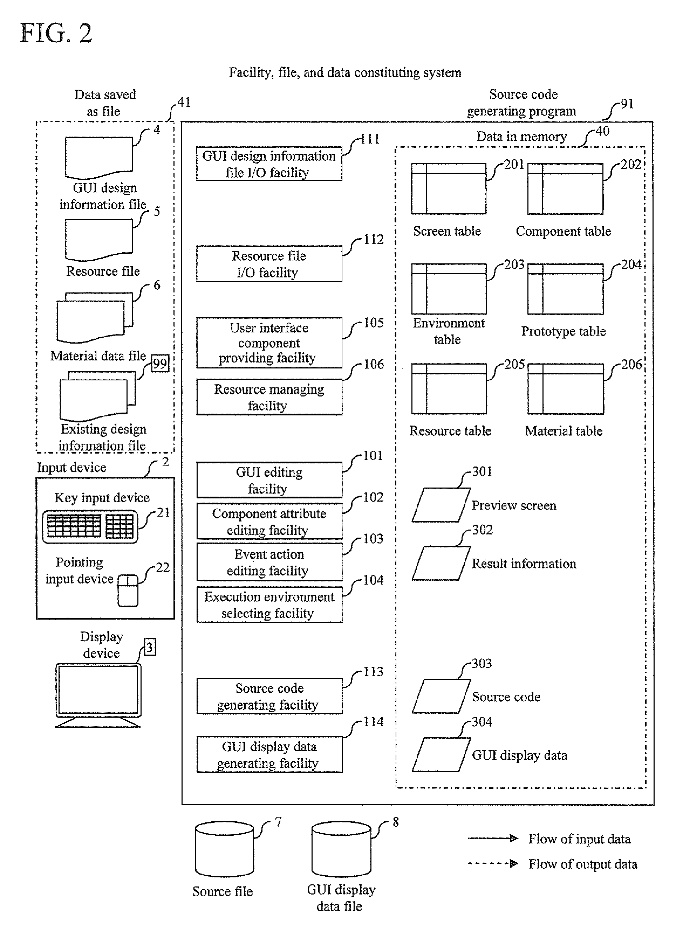

FIG. 2 is a block diagram showing facilities, tables, and pieces of data to be processed of the source code generating program 91.

The source code generating program 91 is composed of a GUI editing facility 101, a component attribute editing facility 102, an event action editing facility 103, an execution environment selecting facility 104, a user interface component providing facility 105, a resource managing facility 106, a GUI design information file I/O facility 111, a resource file I/O facility 112, a source code generating facility 113, and a GUI display data generating facility 114. The source code generating program 91 has the GUI design information file 4 having GUI design information recorded therein, the resource file 5 for managing material data information, the plurality of material data files 6 having respective pieces of material data recorded therein which are each an image or character string set for a user interface component to constitute a part of a GUI, the existing design information file 99 having design information developed by a conventional technique recorded therein, a screen table 201 for managing screen-specific information read from the GUI design information file 4, a component table 202 for managing pieces of component element information such as a position, attribute, and event action of a user interface component read from the GUI design information file 4, an environment table 203 for managing execution environment information read from the GUI design information file 4, a prototype table 204 for managing information on the type and prototype of a user interface component registered in advance, a resource table 205 for managing material data information read from the resource file 5, a material table 206 into which the contents of the plurality of material data files 6 are read, a plurality of preview screens 301 as visual display result images synthesized from GUI design results, result information 302 indicating the processing results from the source code generating facility 113 and GUI display data generating facility 114, source code 303 generated from the GUI design results, and GUI display data 304 generated from the GUI design results. The source code generating program 91 outputs the source code 303 to the source file 7 with the source code generating facility 113 and outputs the GUI display data 304 to the GUI display data file 8 with the GUI display data generating facility 114.

As a data saving process, the source code generating program 91 outputs the contents of the screen table 201 and component table 202 to the GUI design information file 4 and the contents of the resource table 205 to the resource file 5.

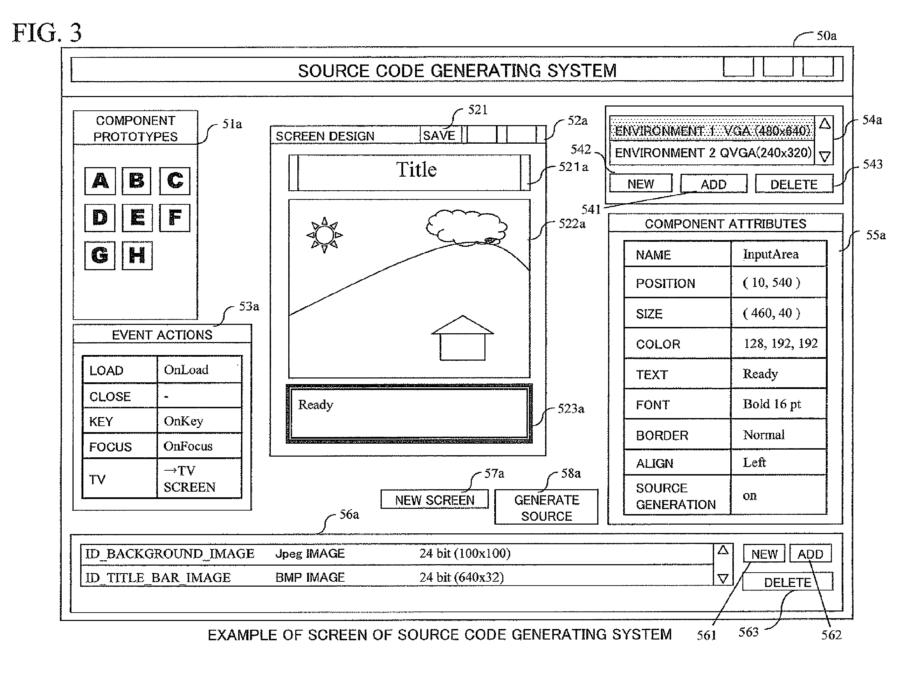

FIG. 3 shows an example of a screen displayed on the display device of the source code generating device of this embodiment.

A screen 50a of the device is composed of a component providing window 51a, a GUI editing window 52a, an event editing window 53a, an execution environment selecting window 54a, a component attribute displaying window 55a, and a resource managing window 56a. A New Screen button 57a and a Generate Source button 58a are displayed in a part of the screen 50a.

Preview images of user interface components 521a, 522a, and 523a are displayed in the GUI editing window 52a.

In FIG. 2, of pieces of data generated while the source code generating device is in action, ones generated in the memory 9 are denoted by reference numeral 40, and ones present as files are denoted by reference numeral 41. However, this configuration is based on an assumption about mounting in this embodiment, and whether each piece of data is arranged in the memory 9 or as a file is not limited to this.

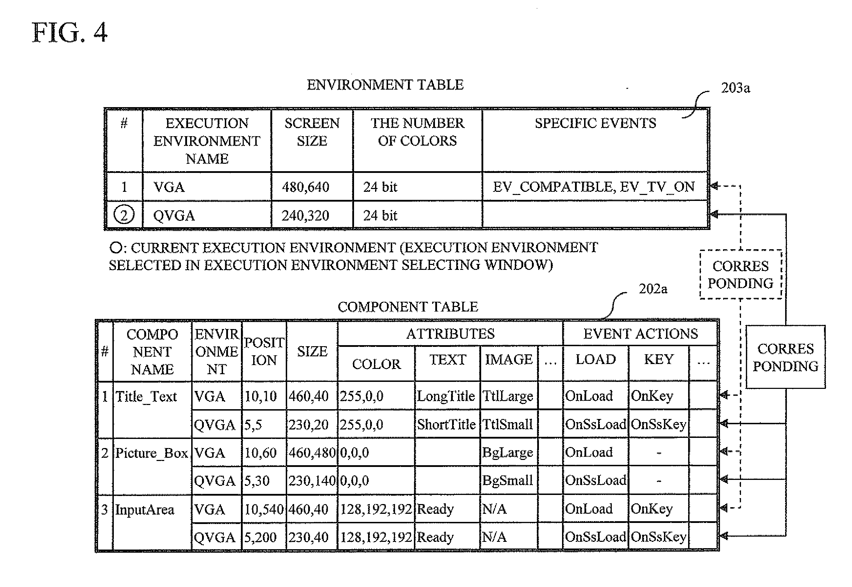

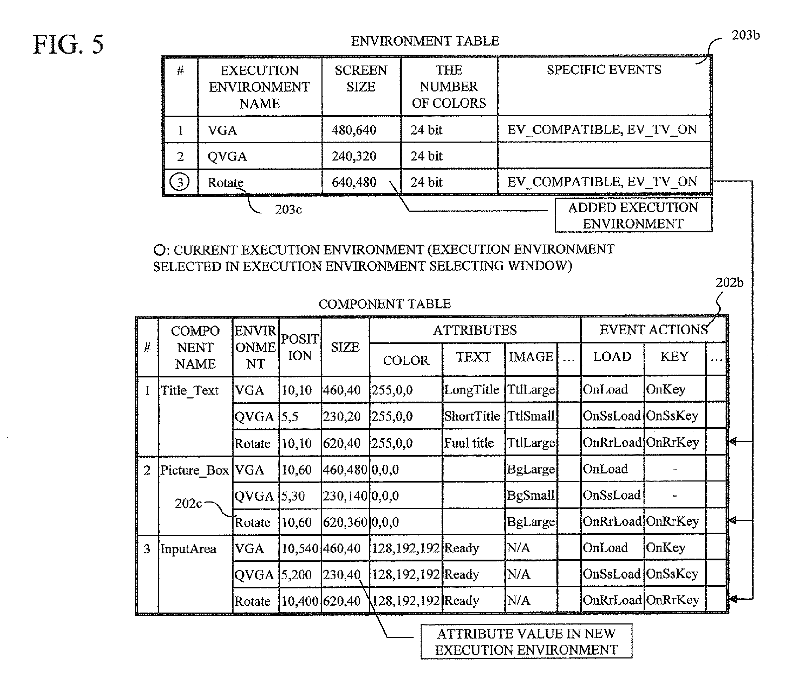

FIGS. 4 and 5 each show charts showing examples of the environment table 203 and component table 202 and the association between entries of the tables. States of the tables before pieces of data for a new execution environment are added are denoted by reference characters 203a and 202a in FIG. 4 while states after the pieces of data for the new execution environment are added are denoted by reference characters 203b and 202b in FIG. 5.

The environment table 203a has an entry for each of execution environments including VGA and QVGA, and pieces of information such as a screen size, the number of colors, and a specific event for the execution environment are recorded in the entry.

The component table 202a has an entry for each of GUI components, such as a button and text, arranged on a screen, and each entry has subentries corresponding to the execution environments held in the environment table 203a. Of pieces of information on a component, enviromnent-dependent ones such as the size and position of the component are recorded in each subentry for the component.

Entries marked with O in FIGS. 4 and 5 are entries for the current execution environment (an execution environment selected in the execution environment selecting window).

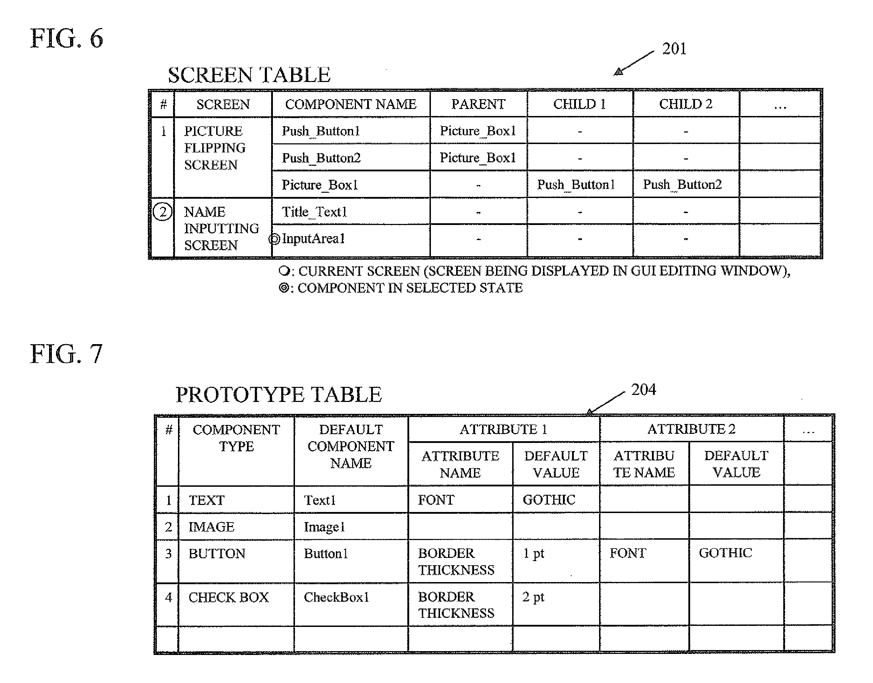

FIG. 6 shows an example of the screen table 201. The screen table 201 has an entry for each of screens such as a name inputting screen. Of pieces of information on a GUI component within the screen, an environment-independent one such as a parent-child relationship with another component arranged on the screen is recorded in the entry.

A circle (

◎

) and a double circle (

○

) in FIG. 6 point to a screen being displayed in the GUI editing window 52a (hereinafter referred to as a "current screen") of the entries in the screen table 201 and one in a selected state of GUI components arranged on the current screen, respectively.

FIG. 7 shows an example of the prototype table 204. A GUI component generally has various attributes such as a border thickness and displayed character font. Which attributes a GUI component has depends on a component type such as a button or text. The value of an attribute is determined for each of instances of a component.

The prototype table 204 has an entry for each of GUI component types, and attributes of a component of the type and their default values are recorded in the entry.

Note that the values of attributes of an instance of a component are recorded in the component table 202.

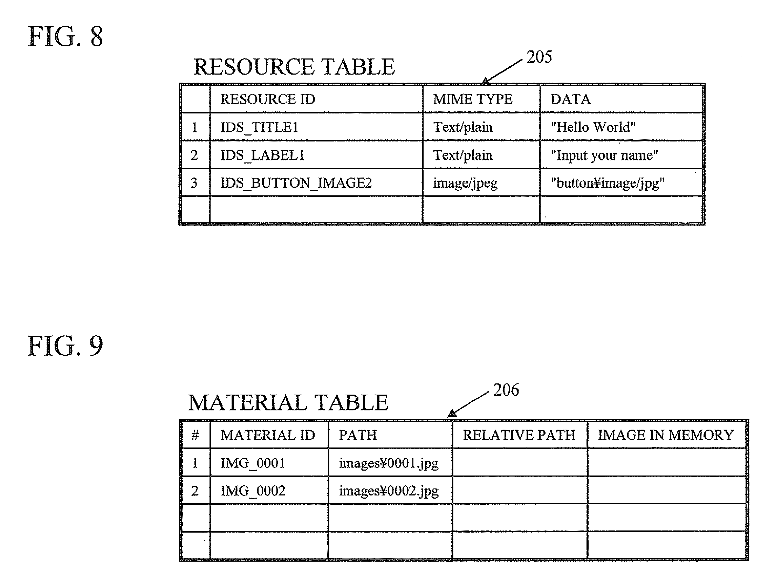

FIG. 8 shows an example of the resource table 205. A resource refers to a piece of data, such as a character string or image, constituting a part of a GUI screen. The resource table 205 has an entry for each of resources and holds an identifier (resource ID) identifying the resource, a data type (MIME type) such as a character string or image, the value of the resource, and the like in the entry. More specifically, a character string itself is held if a resource is of string type while the path to a file containing an image or the like is held if the resource is of image type.

FIG. 9 shows an example of the material table 206. A material refers to, of various types of data, multimedia content such as an image, sound, or moving image. The material table 206 has an entry for each of materials, and an identifier identifying the material, the path to a file containing an image, and the like are recorded in the entry.

The outline of processing of the source code generating device with the above-described configuration will be described below.

The source code generating facility 113 reads the GUI design information file 4 using the GUI design information file I/O facility 111 in accordance with a user instruction at the start of editing to set the contents of the screen table 201, component table 202, and environment table 203. The source code generating facility 113 also reads the resource file 5 and plurality of material data files 6 using the resource file I/O facility 112 to set the contents of the resource table 205 and material table 206.

The source code generating facility 113 generates the prototype table 204 from preprogrammed contents. After the preparation of the tables, the source code generating facility 113 generates the preview screen 301 indicating the display states of components arranged on a screen from the contents of the screen table 201, component table 202, resource table 205, and material table 206 and displays it as an initial screen of the GUI editing window 52a. The source code generating facility 113 sets the contents of the resource table 205 in the resource managing window 56a and clears and initializes the contents of the component attribute displaying window 55a and event editing window 53a. The source code generating facility 113 sets the contents of the prototype table 204 in the component providing window 51a and displays the contents of the environment table 203 in the execution environment selecting window 54a. After that, the source code generating device enters a state waiting for a user operation.

Note that the source code generating device of this embodiment can also use the existing design information file 99, which is a design information file created by a conventional technique. The layout information of each GUI component is recorded for each of the execution environments in GUI design information according to the present invention, as indicated by the component table 202a in FIG. 4. In contrast, layout information for one execution environment is recorded in one piece of GUI design information according to a conventional technique. A plurality of conventional GUI design information files (existing design information files) 99 can be made available by reading the files and merging them into a design information file according to the present invention.

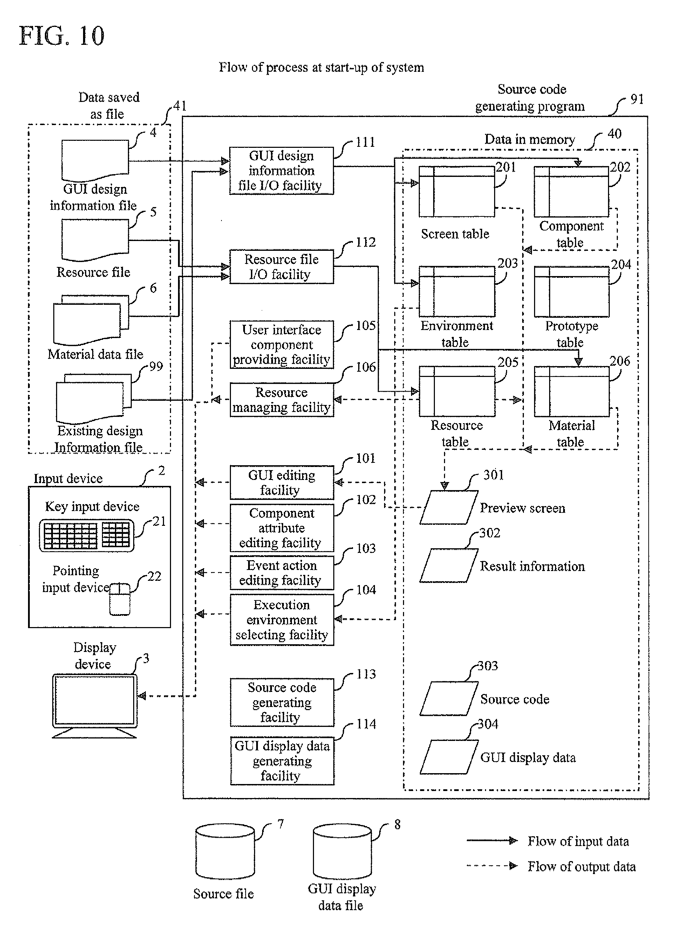

FIG. 10 shows the flow of data at start-up in the source code generating device.

When editing of a GUI design is to be started in the state waiting for a user operation, an execution environment for which the GUI design is to be edited is selected with the execution environment selecting facility 104, and a new screen is created with the user interface component providing facility 105.

Through the screen adding operation, a new entry is added to the screen table 201, and a preview image of a blank screen without any user interface components is displayed in the GUI editing window 52a.

A necessary user interface component is selected from the component providing window 51a for a blank region displayed in the GUI editing window 52a and is added to the GUI editing window 52a in a drag-and-drop manner.

As the result of adding the user interface component, a new entry is added to the component table 202, a graphic reflecting the image of the user interface component is added to the preview image of the GUI editing facility 101.

Pieces of information such as a position, size, attribute value, event action, and the like of the user interface component are stored in the entry of the component table 202 for each of environments set in the environment table 203. Pieces of information including a position, size, attribute value, and event action for an execution environment designated in the execution environment selecting window 54a at that time are used to generate the preview image.

The examples of the environment table 203 and component table 202 and the association between pieces of attribute information in the environment table entries and component table entries are as shown in FIG. 4.

It is possible to select a user interface component by operating the pointing input device 22 constituting a part of the input device 2 and change the position and size of the user interface component. The changed position information and size information of the user interface component are stored in a corresponding entry in the component table 202.

When a screen composed of a plurality of user interface components is to be created, an operation of adding a component from the component providing window 51a is repeated a required number of times.

When pieces of attribute information of a user interface component are to be edited, the user interface component displayed in the GUI editing window 52a is selected with the pointing input device 22. Upon this, the pieces of attribute information of the selected user interface component are displayed in list form in the component attribute displaying window 55a by the component attribute editing facility 102.

When the setting value of an attribute of a user interface component is to be changed, a new setting value is input with the key input device 21 or is selected with the pointing input device 22.

Attribute values of user interface components include a virtual setting value designating an action of the source code generating device, in addition to a setting value corresponding one-to-one to a class provided by a GUI library or a piece of GUI display data. For example, an attribute value designating the presence or absence of output to source code is an internal parameter for controlling the operation of the source code generating facility 113 or GUI display data generating facility 114. If source code generation is performed while the attribute value is set to ON, control is performed to output a process of a corresponding user interface component to the source file or GUI display data file. On the other hand, if the attribute value is set to OFF, control is performed not to output a process.

In addition to the attribute value for source code output, there are also attribute values not directly related to a setting value of a class in the GUI library, such as an attribute value designating the presence or absence of event control and an attribute value designating a source code file. These attribute values are recorded in an entry in the component table 202.

After pieces of information on a piece of material data, such as a character string or image, designated as attribute values of a user interface component are registered in the resource table 205 and material table 206, they are displayed in the component attribute displaying window 55a as options for the component attribute editing facility 102.

When the contents of the material data files 6 are to be registered in the resource table 205, a new entry is created with the resource managing facility 106. When an Add button is selected after the material data file 6 or a material character string is input, a new entry storing a piece of material data and its resource attribute information (e.g., a file type) is added to the resource table 205, and a new entry into which the contents of the selected material data file 6 is read is created in the material table 206.

The contents of the resource table 205 thus created are displayed in list form in the component attribute displaying window 55a as candidates for an attribute value to be edited by the component attribute editing facility 102. An operator of the source code generating device can edit the value of an attribute designating the material data file 6 set for a user interface component by designating the attribute with the pointing input device 22.

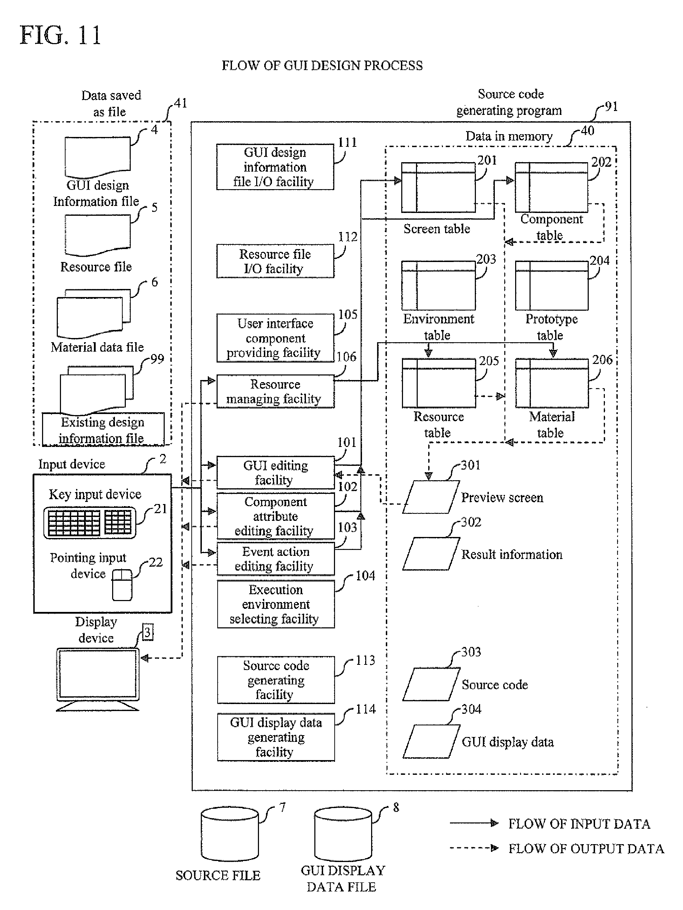

The setting values of attributes of a user interface component including material attributes are immediately reflected in the preview screen 301. FIG. 11 shows, in a block diagram, the flow of a process and data at the time of GUI design editing.

When an event action of a user interface component is to be edited, the user interface component to be edited is selected with the GUI editing facility 101. Upon this, pieces of event action information of the selected component are displayed in list form in the event editing window 53a by the event action editing facility 103. An action for an event to be received by the user interface component is designated with the pointing input device 22 or key input device 21.

If a piece of event action information is changed, the changed piece of event action information is saved in a corresponding entry of the component table 202.

It is possible to display different contents depending on pieces of execution environment information stored in the environment table 203 for each of the preview screen, GUI editing facility, component attribute editing facility, and event action editing facility.

For example, registration of an execution environment using a VGA-size (640 x 480 pixels) LCD (liquid crystal display) and an execution environment using a QVGA-size (320 x 240 pixels) LCD allows an editing operation with switching of the size of the screen region of the GUI editing window 52a.

Assume that GUI designs are edited for an execution environment using a color LCD and one using a monochrome LCD. In this case, a preview image is displayed in color if the "color LCD environment" is selected while a preview image is displayed in monochrome if the "monochrome LCD environment" is selected. This makes it possible to entirely differently preview a screen with components and edit a GUI design in a situation closer to an actual execution environment.

Even if an event which may occur varies according to environment, necessary and sufficient event action editing can be performed efficiently by switching events to be displayed in the event editing window 53a with the event action editing facility 103.

If the position, size, attribute value, and event action of a user interface component are set for each of a plurality of execution environments, one to be edited is selected with the execution environment selecting facility 104.

If the current choice for an execution environment made by the execution environment selecting facility 104 is changed, the source code generating device redisplays all the contents displayed in the GUI editing window 52a, component attribute displaying window 55a, and event editing window 53a with the GUI editing facility 101, component attribute editing facility 102, and event action editing facility 103.

A preview image in the GUI editing window 52a is redrawn based on, of pieces of information stored in the component table 202, pieces of information including a position, size, attribute value, event action for the newly selected execution environment to display contents different from those displayed before the execution environment selection.

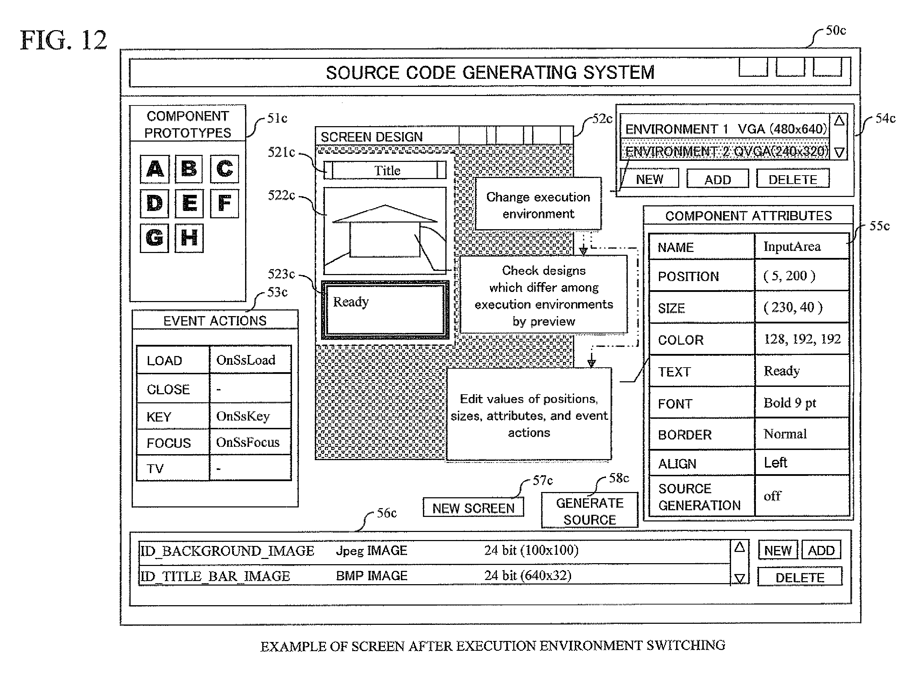

FIG. 12 shows an example of a state when the operation screen in FIG. 3 is switched to another by execution environment switching.

User interface components corresponding to the text display user interface components 521a, 522a, and 523a in FIG. 3 are arranged at different positions, as indicated by reference characters 521c, 522c, and 523c in FIG. 12.

As for user interface component attribute information, attribute values (55a) of the selected component 523a in FIG. 3 and attribute values (55c) of the corresponding component 523c in FIG. 12 are differently set.

After the current choice for an execution environment is changed with the execution environment selecting facility 104, of a plurality of sets of pieces of information including a position, size, attribute, and event action stored in the component table 202, only values for the currently selected execution environment are changed. Accordingly, setting values for another execution environment are protected from effects of the editing operation.

Note that design information for "Environment 2" shown in FIG. 12 can be efficiently created based on design information for "Environment 1" shown in FIG. 3. More specifically, in the execution environment selecting window 54a in FIG. 3, the current execution environment is switched from "Environment 1" to "Environment 2" by operating the pointing input device 22.

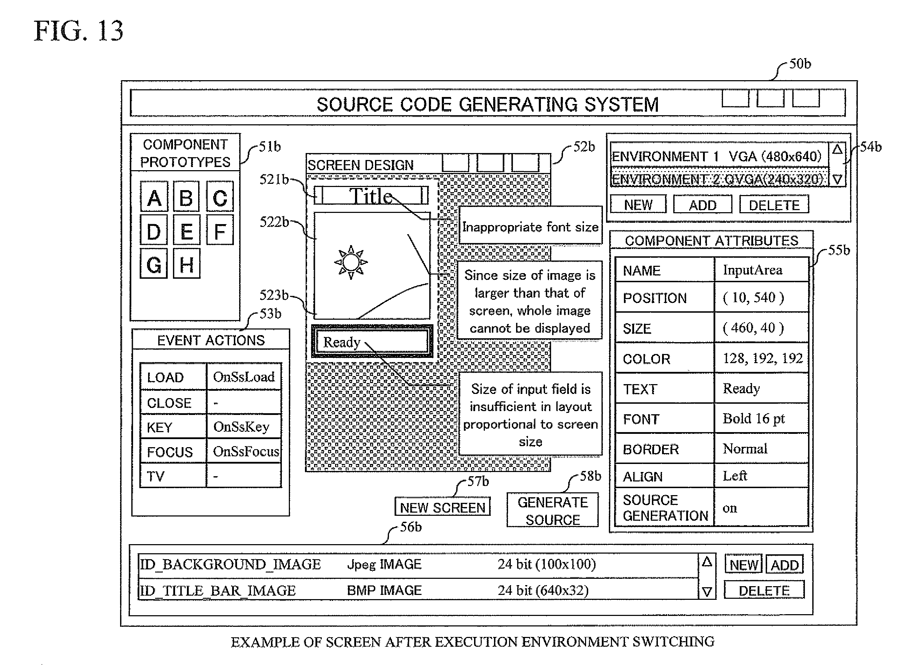

Since the resolution of "Environment 2" is lower than that of "Environment 1," a screen design in the GUI editing window 52a becomes inappropriate without adjustment, as shown in FIG. 13. An appropriate screen design shown in FIG. 12 can be made by adjusting the size and position of each GUI component in the GUI editing window 52a.

Unlike the prior art, it suffices to share a piece of environment-independent information such as a GUI component constituting a part of a screen among execution environments and edit a piece of environment-dependent information such as a GUI component size or position for each of the execution environments.

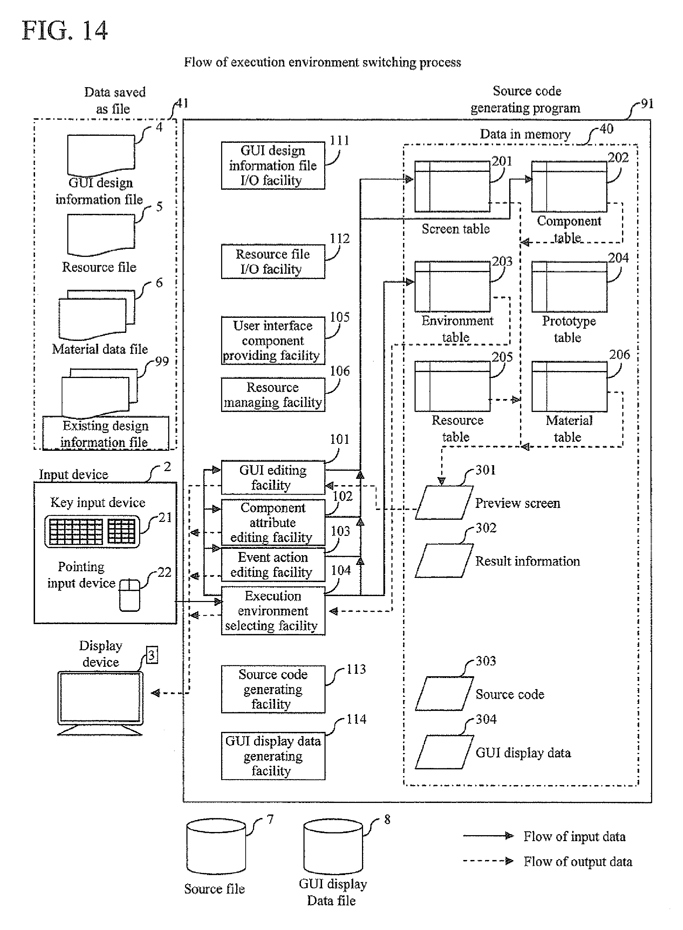

As described above, an operator of the source code generating device can easily change the current choice for an execution environment in the execution environment selecting window 54a at an arbitrary time during GUI design editing. Accordingly, the operator can perform an editing operation as if he/she is designing a plurality of execution environment-specific screens in parallel. FIG. 14 shows the flow of an execution environment switching process when an execution environment is selected.

When an execution environment is to be added, an Add button 541 is selected in the execution environment selecting window 54a, and an entry 203c (FIG. 5) storing pieces of information for the new execution environment is added to the environment table 203b. At the same time, a set 202c of pieces of information including a position, size, attribute, and event action is added to the component table 202b (FIG. 5) for each of entries, and the sets 202c are initialized to be associated with the new environment.

FIG. 5 shows examples of data changes when a new execution environment is added to the environment table 203 and component table 202.

Setting values for GUI designs edited in the above-described manner correspond to screens composed of the same combination of components. That is, the screens are one and the same, only different in GUI layout and settings including a position, size, attribute, and event action. Accordingly, to add or delete a user interface component, an adding or deleting operation needs to be performed only once. In other words, it is unnecessary to repeat an adding or deleting operation a plurality of times corresponding in number to execution environments.

Since one class is assigned to one user interface component, as will be described later, user interface component classes corresponding in number to execution environments are not generated in the memory by generated source code, and a process of managing and saving a plurality of screens at the time of execution is also unnecessary.

The same applies to execution environment deletion. It is only necessary to delete one set of setting values for pieces of information including a position, size, attribute, and event action corresponding to an environment to be deleted from each of all the entries of the component table 202 after deleting a target entry from the environment table 203.

When an editing result is to be saved, a Save button 521 arranged in the GUI editing window 52a is selected.

The source code generating device outputs an editing result related to a GUI design to the GUI design information file 4 to save the result of editing by an operator in a secondary storage such as a hard disk. More specifically, the source code generating device performs a process of outputting the contents of the screen table 201 and component table 202 to the GUI design information file 4 and the contents of the resource table 205 to the resource file 5 as a data saving process. At this time, if a position, size, attribute value, and event action of each user interface component is set for each of a plurality of execution environments, the source code generating device saves all the setting values for each execution environment in the GUI design information file 4.

When source code or GUI display data is to be generated from the design details of a GUI screen, the Generate Source button 58a arranged on the editing screen is selected. Upon this, the source code generating device saves the contents of the screen table 201, component table 202, resource table 205, material table 206, and environment table 203, in all of which the results of GUI design by an operator are stored in the GUI design information file 4 and the contents of the resource table 205 in the resource file 5.

The result information 302 indicating whether the process of generating source code or GUI display data has been successfully performed or some kind of error has occurred during the process is accumulated in the memory 9 and is displayed as a message to the operator of the source code generating device after completion of the process.

Source code or GUI display data thus generated includes pieces of source code and pieces of GUI display data for the plurality of execution environments registered in the environment table 203.

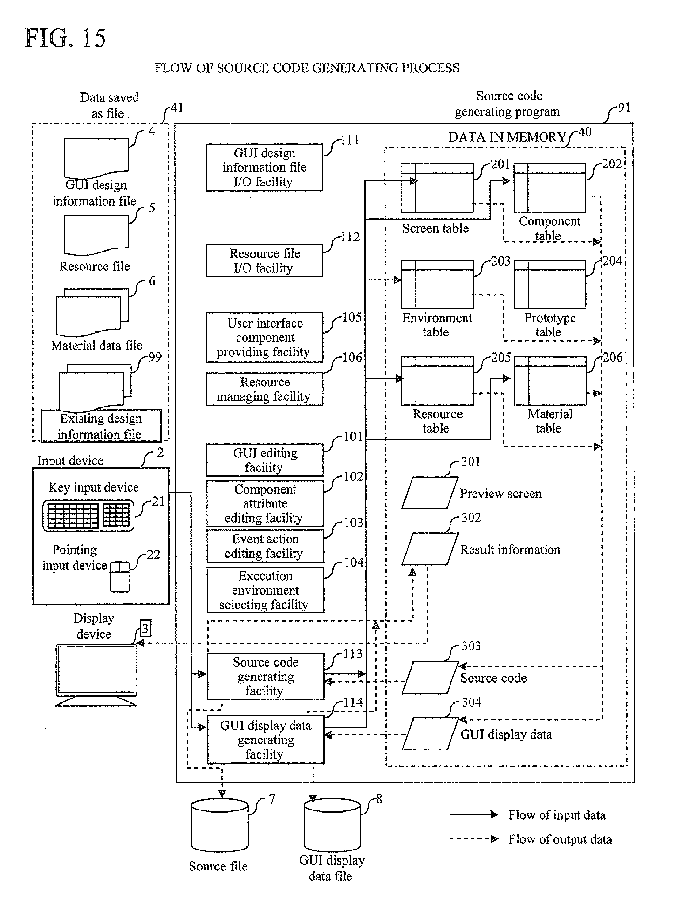

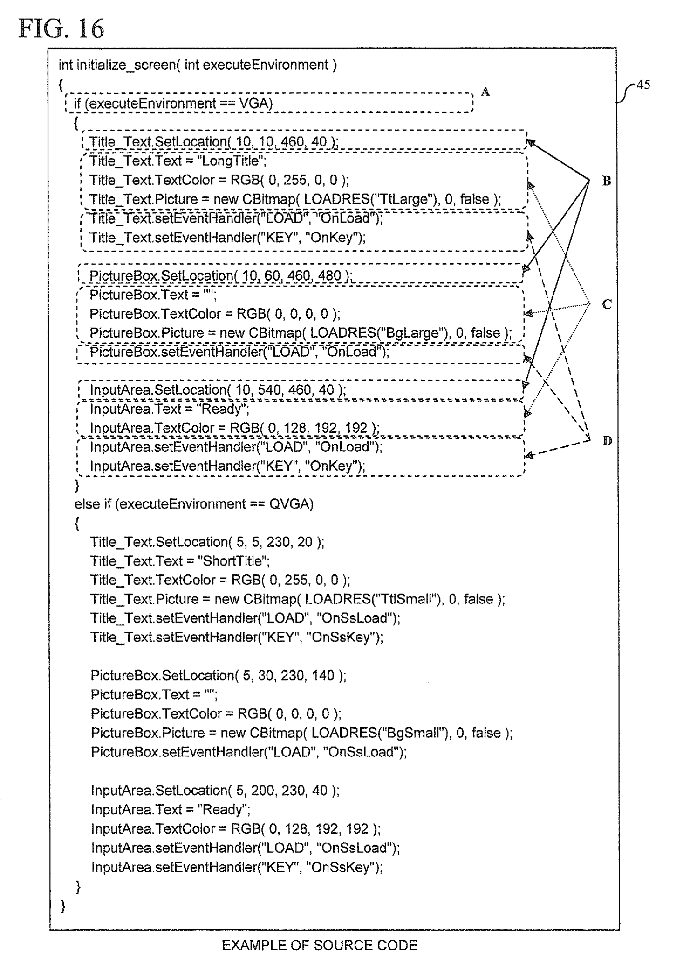

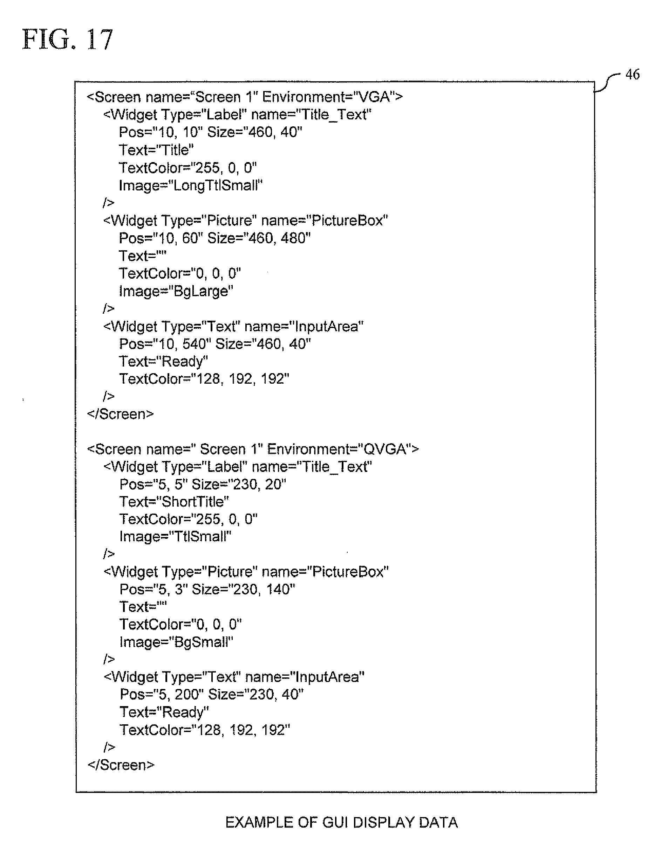

FIG. 15 shows the flow of a source code generating process in the source code generating device. FIG. 16 shows an example of generated source code, and FIG. 17 shows an example of generated GUI display data.

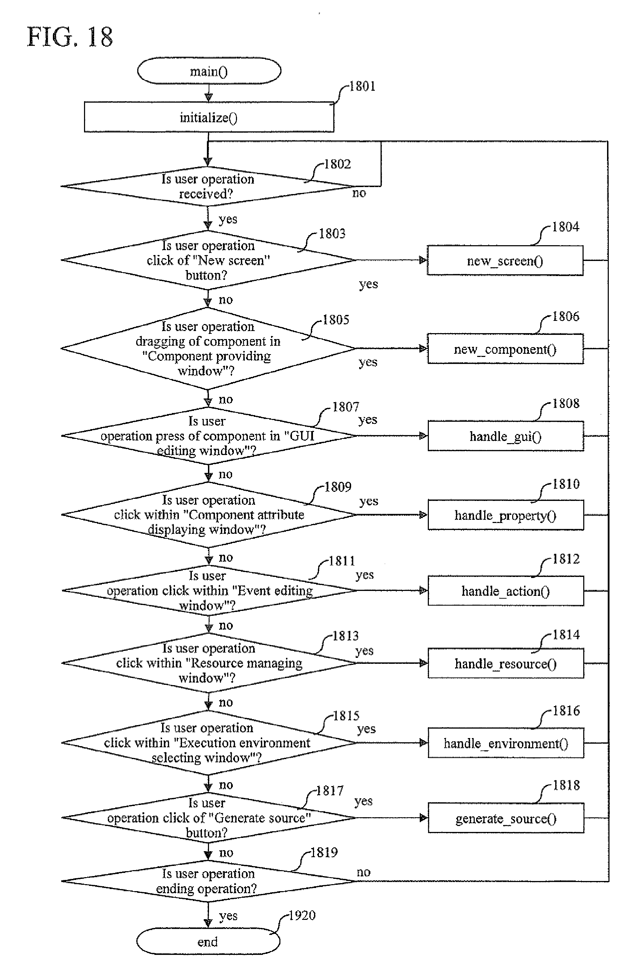

FIG. 18 is a flow chart showing processing by the function main() for performing a top-level process in the source code generating device.

First, the function initialize() is called to perform an initial process (step 1801). After that, the flow waits for a user operation (step 1802). Upon receipt of a user operation, the flow branches to a destination corresponding to the user operation.

It is determined (step 1803) whether the user operation is a click of the "New Screen" button 57a. If YES in step 1803, the function new_screen() is called to perform a new screen adding process (step 1804). After that, the flow waits for another user operation.

It is determined (step 1805) whether the user operation is a dragging operation of a component in the component providing window 51a. If YES in step 1805, the function new_component() is called to perform a component adding process (step 1806). After that, the flow waits for another user operation.

It is determined (step 1807) whether the user operation is a press of a component in the GUI editing window 52a. If YES in step 1807, the function handle_gui() is called to perform a GUI editing process (step 1808). After that, the flow waits for another user operation.

It is determined (step 1809) whether the user operation is a click within the component attribute displaying window 55a. If YES in step 1809, the function handle_property() is called to perform an attribute editing process (step 1810). After that, the flow waits for another user operation.

It is determined (step 1811) whether the user operation is a click within the event editing window 53a. If YES in step 1811, the function handle_action() is called to perform an event editing process (step 1812). After that, the flow waits for another user operation.

It is determined (step 1813) whether the user operation is a click within the resource managing window 56a. If YES in step 1813, the function handle_resource() is called to perform a resource editing process (step 1814). After that, the flow waits for another user operation.

It is determined (step 1815) whether the user operation is a click within the execution environment selecting window 54a. If YES in step 1815, the function handle_environment() is called to perform an execution environment editing process (step 1816). After that, the flow waits for another user operation.

It is determined (step 1817) whether the user operation is a click of the Generate Source button 58a. If YES in step 1817, the function generate_source() is called to perform a source generating process (step 1818). After that, the flow waits for another user operation.

It is determined (step 1819) whether the user operation is an ending operation. If YES in step 1819, the process ends (step 1820); otherwise, the flow waits for another user operation.

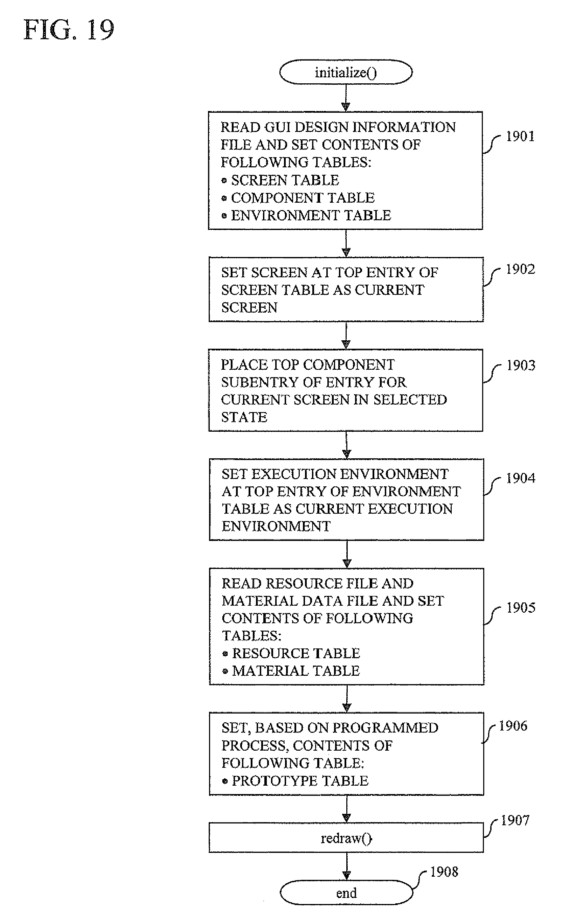

FIG. 19 is a flow chart showing processing by the function initialize() for performing the initial process.

First, the GUI design information file 4 is read, and the contents of the screen table 201, component table 202, and environment table 203 are set (step 1901). A screen at the top entry of the screen table 201 is set as the current screen (step 1902). The top component subentry of the entry for the current screen is placed in a selected state (step 1903). An execution environment at the top entry of the environment table 203 is set as the current execution environment (step 1904).

The resource file 5 and material data files 6 are read, and the contents of the resource table 205 and material table 206 are set (step 1905). The contents of the prototype table 204 are set based on a programmed process (step 1906). The function redraw() is called to perform a process of drawing the editing screen 50a in FIG. 3 (step 1907). After that, the process ends (step 1908).

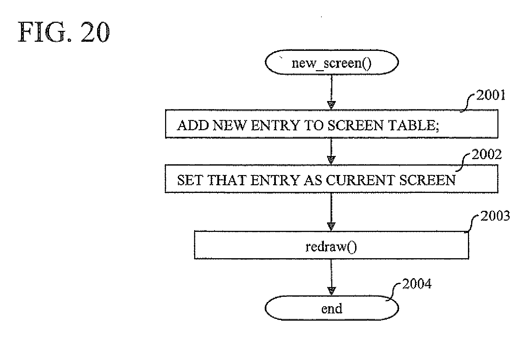

FIG. 20 is a flow chart showing processing by the function new_screen() for performing the new screen creating process.

First, a new entry is added to the screen table 201 (step 2001). After a screen at the entry is set as the current screen (step 2002), the function redraw() is called to perform the process of drawing the editing screen 50a (step 2003). After that, the process ends (step 2004).

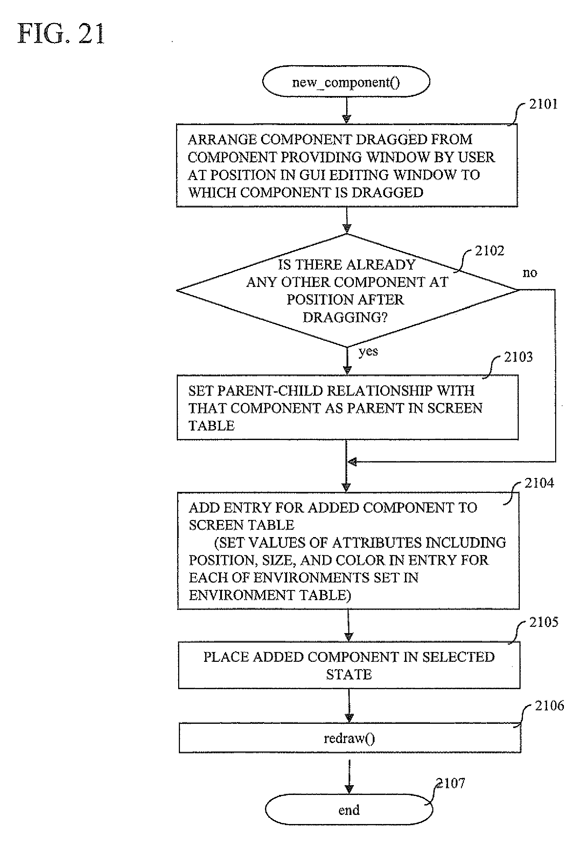

FIG. 21 shows the flow of processing by the function new_component() for performing the process of adding a component to the GUI editing window 52a.

First, a component dragged from the component providing window 51a by a user is arranged at a position in the GUI editing window 52a to which the component is dragged (step 2101). It is determined (step 2102) whether there is already any other component at the position after the dragging. If YES in step 2102, a parent-child relationship with the component as a parent is set in the screen table 201 (step 2103).

An entry for the added component is then added to the screen table 201 (the values of attributes including a position, size, and color are set in the entry for each of environments set in the environment table 203) (step 2104). After the added component is placed into the selected state (step 2105), the function redraw() is called to perform the process of drawing the editing screen 50a (step 2106). After that, the process ends (step 2107).

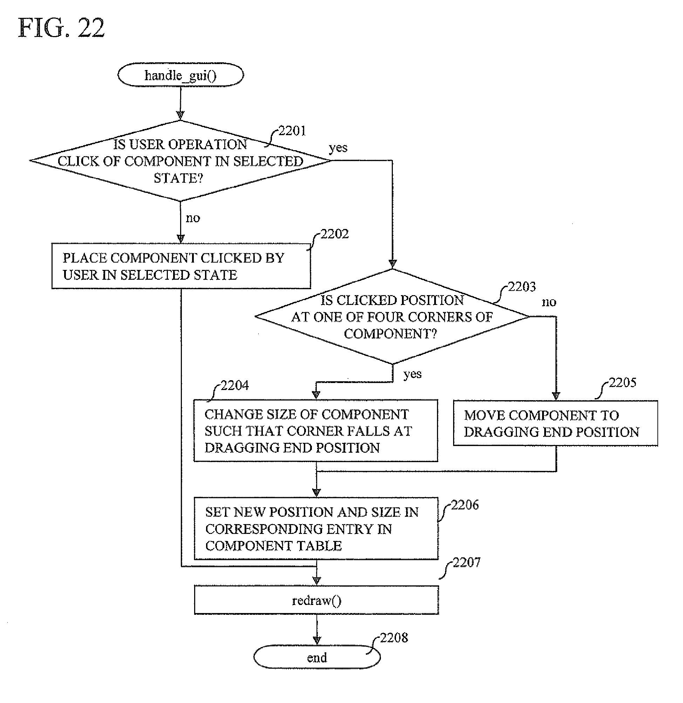

FIG. 22 is a flow chart showing processing by the function handle_gui() for performing the GUI editing process.

First, it is determined (step 2201) whether a received user operation is a click of a component in the selected state. If NO in step 2201, a component clicked by a user is placed in the selected state (step 2202), and the function redraw() is called to perform the process of drawing the editing screen 50a (step 2207). After that, the process ends (step 2208).

On the other hand, if the user operation is a click of a component in the selected state, it is determined (step 2203) whether a clicked position is at one of the four corners of the component. If YES in step 2203, the user operation is regarded as a component resizing operation, and the size of the component is changed such that the corner falls at a dragging end position (step 2204). Otherwise, the user operation is regarded as a component moving operation, and the component is moved to the dragging end position (step 2205).

A new position and size are then set in a corresponding entry in the component table 202 (step 2206), and the function redraw() is called to perform the process of drawing the editing screen 50a (step 2207). After that, the process ends (step 2208).

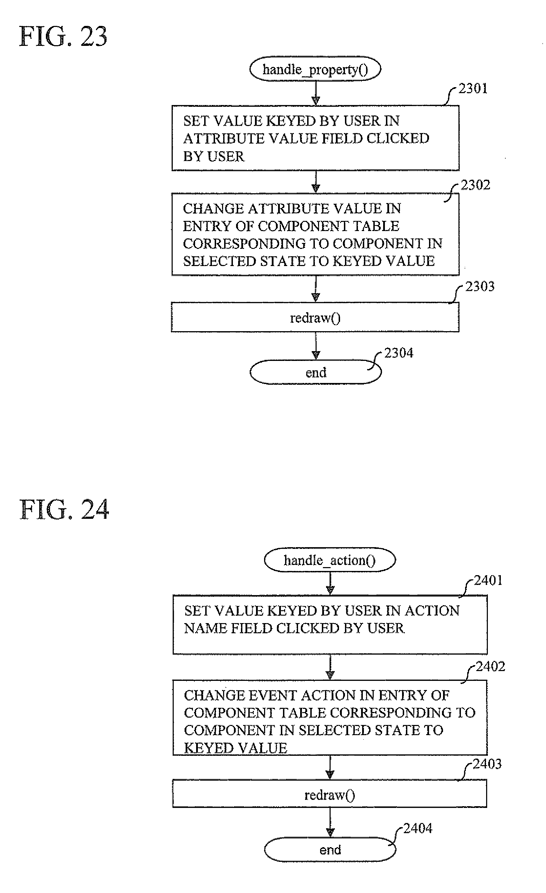

FIG. 23 is a flow chart showing processing by the function handle_property() for performing the attribute editing process.

First, a value keyed by a user is set in an attribute value field clicked by the user (step 2301), and an attribute value in an entry of the component table 202 corresponding to a component in the selected state is changed to the keyed value (step 2302). The function redraw() is then called to perform the process of drawing the editing screen 50a (step 2303). After that, the process ends (step 2304).

FIG. 24 is a flow chart showing processing by the function handle_action() for performing the event editing process.

First, a value keyed by a user is set in an action name field clicked by the user (step 2401), and an event action in an entry of the component table 202 corresponding to a component in the selected state is changed to the keyed value (step 2402). The function redraw() is then called to perform the process of drawing the editing screen 50a (step 2403). After that, the process ends (step 2404).

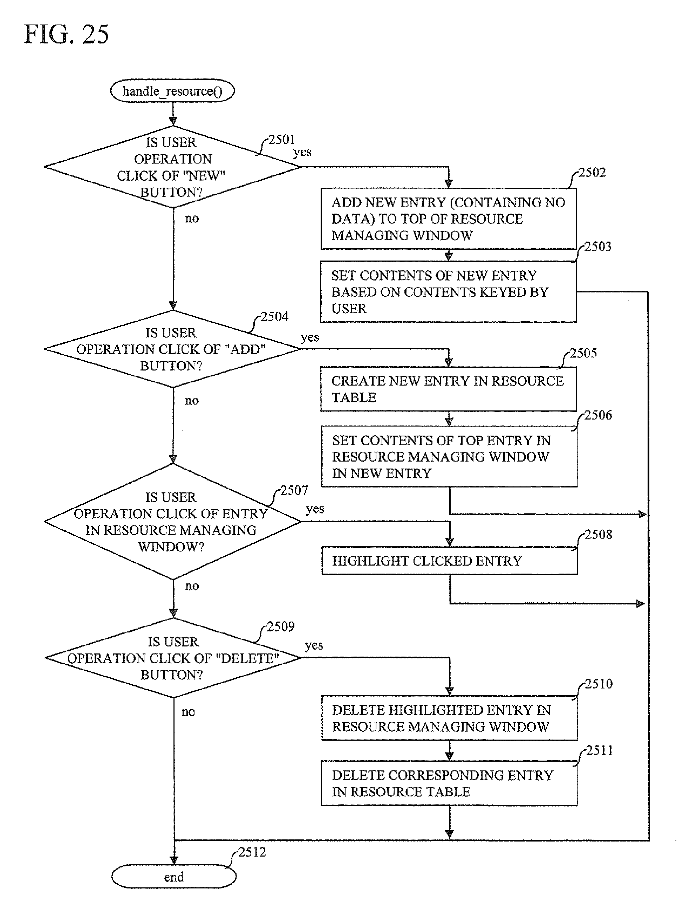

FIG. 25 is a flow chart showing processing by the function handle_resource() for performing the resource editing process.

First, it is determined (step 2501) whether a received user operation is a click of a "New" button 561. If YES in step 2501, a new entry (containing no data) is created in the top of the resource managing window 56a (step 2502). The contents of the new entry are set based on contents keyed by a user (step 2503). After that, the process ends (step 2512).

It is determined (step 2504) whether the user operation is a click of an "Add" button 562. If YES in step 2504, a new entry (containing no data) is created in the resource table 205 (step 2505), and the contents of the top entry in the resource managing window 56a are set in the new entry (step 2506). After that, the process ends (step 2512).

It is determined (step 2507) whether the user operation is a click of an entry in the resource managing window 56a. If YES in step 2507, the clicked entry is highlighted (step 2508). After that, the process ends (step 2512).

It is determined (step 2509) whether the user operation is a click of a "Delete" button 563. If YES in step 2509, a highlighted entry in the resource managing window 56a is deleted (step 2510), and a corresponding entry in the resource table 205 is deleted (step 2511). After that, the process ends (step 2512).

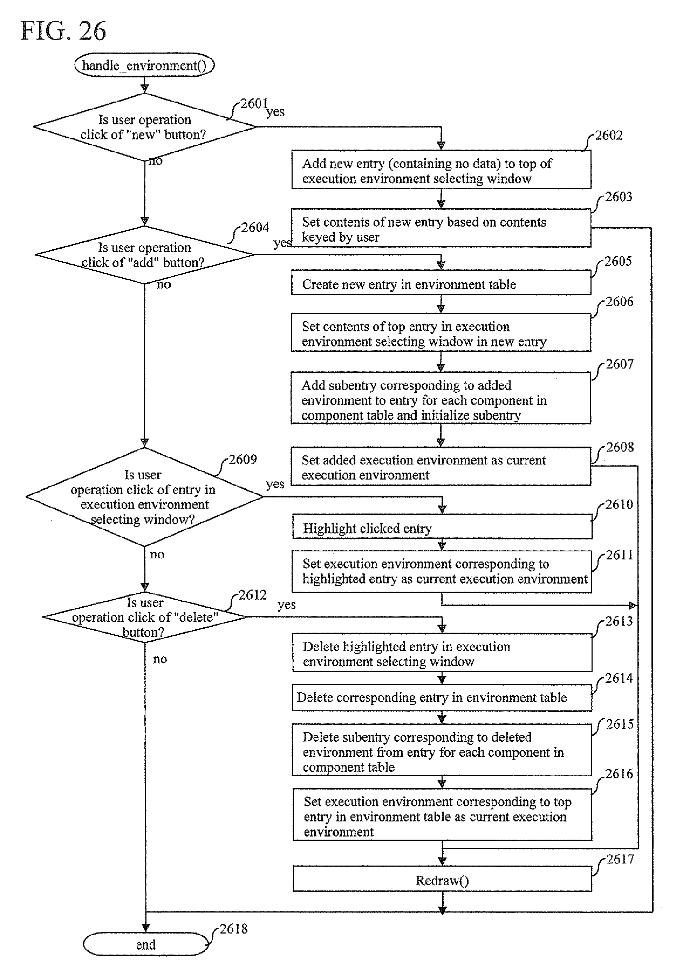

FIG. 26 is a flow chart showing processing by the function handle_environment() for performing the execution environment editing process.

First, it is determined (step 2601) whether a received user operation is a click of a "New" button 542 for execution environments. If YES in step 2601, a new entry (containing no data) is added to the top of the execution environment selecting window 54a (step 2602), and the contents of the new entry are set based on contents keyed by a user (step 2603). After that, the process ends (step 2618).

It is determined (step 2604) whether the user operation is a click of the "Add" button 541. If YES in step 2604, a new entry is created in the environment table 203 (step 2605), and the contents of the top entry in the execution environment selecting window 54a are set in the new entry (step 2606). A subentry corresponding to an added environment is added to the entry for each component in the component table 202 and is initialized (step 2607). The added execution environment is set as the current execution environment (step 2608), and the function redraw() is called to perform the process of drawing the editing screen 50a (step 2617). After that, the process ends (step 2618).

It is determined (step 2609) whether the user operation is a click of an entry in the execution environment selecting window 54a. If YES in step 2609, the clicked entry is highlighted (step 2610), and an execution environment corresponding to the highlighted entry is set as the current execution environment (step 2611). The function redraw() is called to perform the process of drawing the editing screen 50a (step 2617). After that, the process ends (step 2618).

It is determined (step 2612) whether the user operation is a click of a "Delete" button 543. If YES in step 2612, a highlighted entry in the execution environment selecting window 54a is deleted (step 2613), a corresponding entry in the environment table 203 is deleted (step 2614), and a subentry corresponding to a deleted environment is deleted from the entry for each component in the component table 202 (step 2615). An execution environment corresponding to the top entry in the environment table 203 is set as the current execution environment (step 2616), and the function redraw() is called to perform the process of drawing the editing screen 54a (step 2617). After that, the process ends (step 2618).

If the user operation is none of the above, the process ends (step 2618).

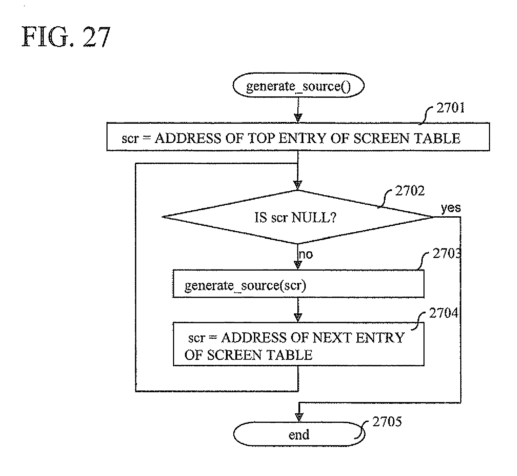

FIG. 27 is a flow chart showing processing by the function generate_source() for performing the source generating process.

First, the address of the top entry of the screen table 201 is assigned to a variable scr (step 2701), and it is determined (step 2702) whether scr is null. If scr is null, the process ends (step 2705); otherwise, the function generate_source(scr) is called to generate a piece of source code for displaying a screen corresponding to scr (step 2703). After the address of the next entry of the screen table 201 is assigned to the variable scr (step 2704), the flow returns to the determination in step 2702.

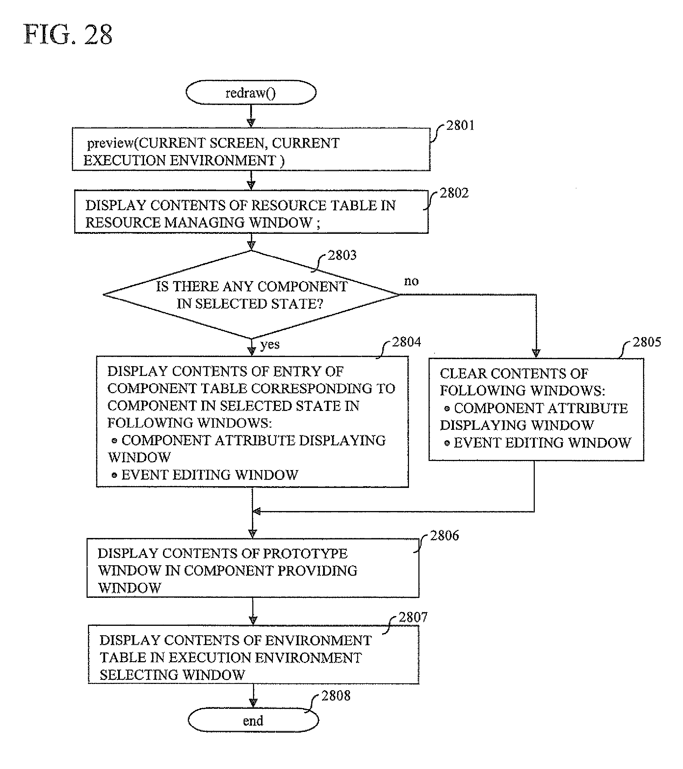

FIG. 28 is a flow chart showing processing by the function redraw() for performing the process of drawing the editing screen 50a.

First, the function preview(the current screen, the current execution environment) is called, and a preview screen indicating the display states of components arranged on a screen is generated and displayed in the GUI editing window 52a (step 2801). The contents of the resource table 205 are displayed in the resource managing window 56a (step 2802). It is then determined (step 2803) whether there is any component in the selected state among the components. If YES in step 2803, the contents of an entry of the component table 202 corresponding to the component in the selected state are displayed in the component attribute displaying window 55a and event editing window 53a (step 2804). Otherwise, the contents of the component attribute displaying window 55a and event editing window 53a are cleared (step 2805).

The contents of the prototype table 204 are then displayed in the component providing window 51a (step 2806), and the contents of the environment table 203 are displayed in the execution environment selecting window 54a (step 2807). After that, the process ends (step 2808).

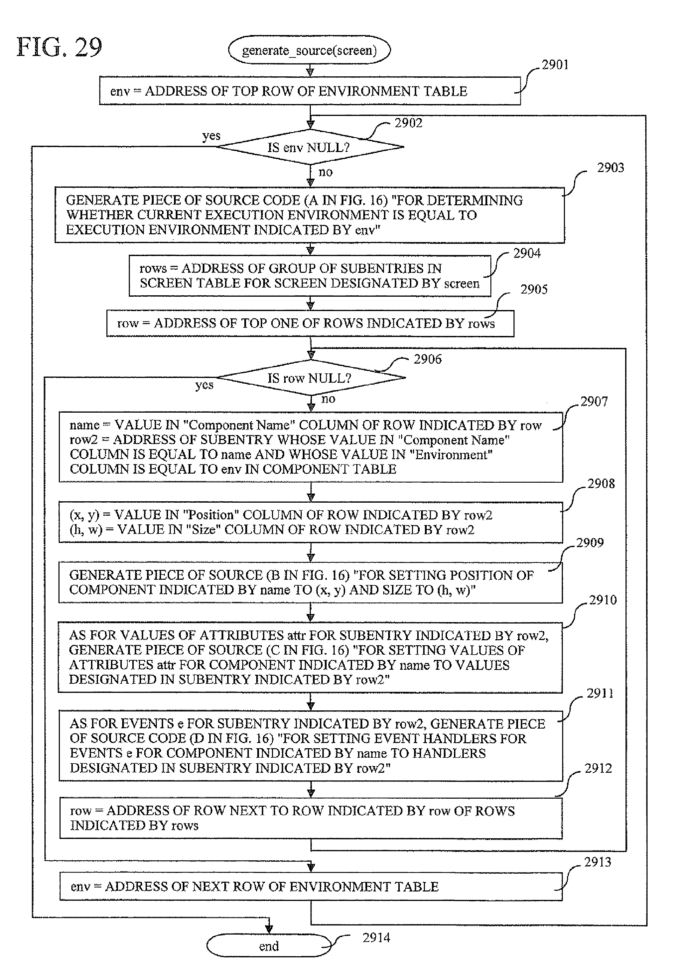

FIG. 29 is a flow chart showing processing by the function generate_source(screen) for performing the source code generating process.

In this function, first, the address of the top row of the environment table 203 is assigned to a variable env (step 2901). It is determined (step 2902) whether env is null. If env is null, the process ends (step 2914); otherwise, a piece of source code (a part indicated by reference character A in FIG. 16) "for determining whether the current execution environment is equal to an execution environment indicated by env" is generated (step 2903), the address of a group of subentries in the screen table 201 for a screen designated by screen is assigned to a variable rows (step 2904), and the address of the top one of rows indicated by rows is assigned to a variable row (step 2905). It is then determined (step 2906) whether row is null. If row is null, the address of the next row of the environment table 203 is assigned to the variable env, and the flow returns to the determination in step 2902 (step 2913).

If row is not null, a value in the "Component Name" column of the row indicated by row is assigned to a variable name, and the address of a subentry whose value in the "Component Name" column is equal to name and whose value in the "Environment" column is equal to env in the component table 202 is assigned to a variable row2 (step 2907). A value in the "Position" column of the row indicated by row2 is assigned to a variable (x, y), and a value in the "Size" column of the row indicated by row2 is assigned to a variable (h, w) (step 2908). A piece of source code (a part indicated by reference character B in FIG. 16) "for setting the position of a component indicated by name to (x, y) and the size to (h, w) is generated (step 2909)". As for the values of attributes attr for the subentry indicated by row2, a piece of source code (a part indicated by reference character C in FIG. 16) "for setting the values of the attributes attr for the component indicated by name to values designated in the subentry indicated by row2" is generated (step 2910).

As for events e for the subentry indicated by row2, a piece of source code (a part indicated by reference character D in FIG. 16) "for setting event handlers for events e for the component indicated by name to handlers designated in the subentry indicated by row2" is generated (step 2911). The address of a row next to the row indicated by row of the rows indicated by rows is assigned to the variable row (step 2912). After that, the flow returns to the determination in step 2906.

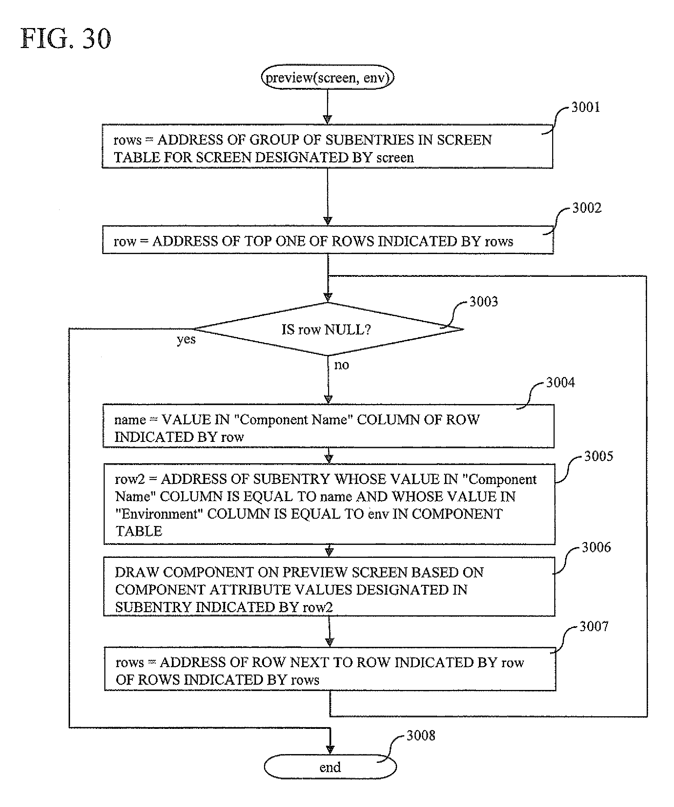

FIG. 30 is a flow chart showing processing by the function preview(screen, env) for generating a preview screen showing the display state of a component arranged on a screen.

First, the address of a group of subentries in the screen table 201 for a screen designated by screen is assigned to a variable rows (step 3001). The address of the top one of rows indicated by rows is assigned to a variable row (step 3002). It is then determined (step 3003) whether row is null. If row is null, the process ends (step 3008). Otherwise, a value in the "Component Name" column of the row indicated by row is assigned to a variable name (step 3004). The address of a subentry whose value in the "Component Name" column is equal to name and whose value in the "Environment" column is equal to env in the component table 202 is assigned to a variable row2 (step 3005). A component is drawn on a preview screen based on component attribute values designated in the subentry indicated by row2 (step 3006). The address of a row next to the row indicated by row of the rows indicated by rows is assigned to the variable row (step 3007). After that, the flow returns to the determination in step 3003.

**Claims**

1. A source code generating device for generating source code of a program to be executed by a computer and GUI display data for displaying a user interface component on a display screen, comprising:

   first means for editing user interface components with different pieces of component element information including positions, sizes and component attributes, each of the user interface components corresponding to execution environments of the computer; and,
   second means for generating and outputting GUI display data for the user interface components corresponding to a designated one of the execution environments based on pieces of component information obtained by the result of editing and source code for displaying the user interface components using the GUI display data.

2. The source code generating device according to claim 1, further comprising means for previewing the user interface components on an editing screen using the GUI display data.

3. The source code generating device according to claim 1 or 2, further comprising means for receiving an instruction of switching the execution environments to switch to an editing screen, a user interface component in an execution environment designated by the instruction.

4. The source code generating device according to any one of claims 1 to 3, further comprising means for excluding at least one of the user interface components from a list of objects for which one of source code and GUI display data is to be output, depending on execution environment.

## FIG. 1

SOURCE CODE GENERATING DEVICE

PROCESSOR *1*

3 — DISPLAY DEVICE

CPU *10*

MEMORY *9*

91 — SOURCE CODE GENERATING PROGRAM

2 — INPUT DEVICE

21 — KEY INPUT DEVICE

22 — POINTING INPUT DEVICE

92 — OPERATING SYSTEM

4 — GUI DESIGN INFORMATION FILE

5 — RESOURCE FILE

6 — MATERIAL DATA FILE

99 — EXISTING DESIGN INFORMATION FILE

7 — SOURCE FILE

8 — GUI DISPLAY DATA FILE

# FIG. 2

Facility, file, and data constituting system

Data saved
as file ⌐41

GUI design
information file ⌐4

Resource file ⌐5

Material data file ⌐6
|99|

Existing design
information file

Input device ⌐2

Key input device ⌐21

Pointing
input device ⌐22

Display
device |3|

Source code
generating program ⌐91

GUI design information
file I/O facility ⌐111

Resource file
I/O facility ⌐112

User interface
component
providing facility ⌐105

Resource managing
facility ⌐106

GUI editing
facility ⌐101

Component attribute
editing facility ⌐102

Event action
editing facility ⌐103

Execution environment
selecting facility ⌐104

Source code
generating facility ⌐113

GUI display data
generating facility ⌐114

Data in memory ⌐40

Screen table ⌐201    Component table ⌐202

Environment
table ⌐203    Prototype table ⌐204

Resource table ⌐205    Material table ⌐206

Preview screen ⌐301

Result information ⌐302

Source code ⌐303

GUI display data ⌐304

Source file ⌐7    GUI display
data file ⌐8

⟶ Flow of input data

----▶ Flow of output data

15

# FIG. 3

**SOURCE CODE GENERATING SYSTEM** — 50a

### COMPONENT PROTOTYPES — 51a

A  B  C

D  E  F

G  H

### SCREEN DESIGN  | SAVE — 52a (521)

Title — 521a

522a

Ready — 523a

### EVENT ACTIONS — 53a

| LOAD | OnLoad |
|------|--------|
| CLOSE | - |
| KEY | OnKey |
| FOCUS | OnFocus |
| TV | →TV SCREEN |

ENVIRONMENT 1 VGA (480×640) — 54a
ENVIRONMENT 2 QVGA(240×320) — 542

| NEW | ADD | DELETE | — 543 (541)

### COMPONENT ATTRIBUTES — 55a

| NAME | InputArea |
|------|-----------|
| POSITION | ( 10, 540 ) |
| SIZE | ( 460, 40 ) |
| COLOR | 128, 192, 192 |
| TEXT | Ready |
| FONT | Bold 16 pt |
| BORDER | Normal |
| ALIGN | Left |
| SOURCE GENERATION | on |

NEW SCREEN — 57a    GENERATE SOURCE — 58a

56a

| ID_BACKGROUND_IMAGE | Jpeg IMAGE | 24 bit (100x100) | △ | NEW | ADD |
| ID_TITLE_BAR_IMAGE | BMP IMAGE | 24 bit (640x32) | ▽ | | DELETE |

561    563    562

EXAMPLE OF SCREEN OF SOURCE CODE GENERATING SYSTEM

EP 1 988 454 A1

# FIG. 4

ENVIRONMENT TABLE  —203a

| # | EXECUTION ENVIRONMENT NAME | SCREEN SIZE | THE NUMBER OF COLORS | SPECIFIC EVENTS |
|---|---|---|---|---|
| 1 | VGA | 480,640 | 24 bit | EV_COMPATIBLE, EV_TV_ON |
| ②  | QVGA | 240,320 | 24 bit | |

O: CURRENT EXECUTION ENVIRONMENT (EXECUTION ENVIRONMENT SELECTED IN EXECUTION ENVIRONMENT SELECTING WINDOW)

CORRES PONDING

COMPONENT TABLE  —202a

CORRES PONDING

| # | COMPONENT NAME | ENVIRONMENT | POSITION | SIZE | ATTRIBUTES | | | | EVENT ACTIONS | | |
|---|---|---|---|---|---|---|---|---|---|---|---|
| | | | | | COLOR | TEXT | IMAGE | ... | LOAD | KEY | ... |
| 1 | Title_Text | VGA | 10,10 | 460,40 | 255,0,0 | LongTitle | TtlLarge | | OnLoad | OnKey | |
| | | QVGA | 5,5 | 230,20 | 255,0,0 | ShortTitle | TtlSmall | | OnSsLoad | OnSsKey | |
| 2 | Picture_Box | VGA | 10,60 | 460,480 | 0,0,0 | | BgLarge | | OnLoad | - | |
| | | QVGA | 5,30 | 230,140 | 0,0,0 | | BgSmall | | OnSsLoad | - | |
| 3 | InputArea | VGA | 10,540 | 460,40 | 128,192,192 | Ready | N/A | | OnLoad | OnKey | |
| | | QVGA | 5,200 | 230,40 | 128,192,192 | Ready | N/A | | OnSsLoad | OnSsKey | |

EP 1 988 454 A1

# FIG. 5

ENVIRONMENT TABLE — 203b

| # | EXECUTION ENVIRONMENT NAME | SCREEN SIZE | THE NUMBER OF COLORS | SPECIFIC EVENTS |
|---|---|---|---|---|
| 1 | VGA | 480,640 | 24 bit | EV_COMPATIBLE, EV_TV_ON |
| 2 | QVGA | 240,320 | 24 bit | |
| ③ | Rotate | 640,480 | 24 bit | EV_COMPATIBLE, EV_TV_ON |

203c

ADDED EXECUTION ENVIRONMENT

○: CURRENT EXECUTION ENVIRONMENT (EXECUTION ENVIRONMENT SELECTED IN EXECUTION ENVIRONMENT SELECTING WINDOW)

COMPONENT TABLE — 202b

| # | COMPONENT NAME | ENVIRONMENT | POSITION | SIZE | ATTRIBUTES | | | ... | EVENT ACTIONS | | ... |
|---|---|---|---|---|---|---|---|---|---|---|---|
| | | | | | COLOR | TEXT | IMAGE | | LOAD | KEY | |
| 1 | Title_Text | VGA | 10,10 | 460,40 | 255,0,0 | LongTitle | TtlLarge | | OnLoad | OnKey | |
| | | QVGA | 5,5 | 230,20 | 255,0,0 | ShortTitle | TtlSmall | | OnSsLoad | OnSsKey | |
| | | Rotate | 10,10 | 620,40 | 255,0,0 | Fuul title | TtlLarge | | OnRrLoad | OnRrKey | |
| 2 | Picture_Box | VGA | 10,60 | 460,480 | 0,0,0 | | BgLarge | | OnLoad | - | |
| | 202c | QVGA | 5,30 | 230,140 | 0,0,0 | | BgSmall | | OnSsLoad | - | |
| | | Rotate | 10,60 | 620,360 | 0,0,0 | | BgLarge | | OnRrLoad | OnRrKey | |
| 3 | InputArea | VGA | 10,540 | 460,40 | 128,192,192 | Ready | N/A | | OnLoad | OnKey | |
| | | QVGA | 5,200 | 230,40 | 128,192,192 | Ready | N/A | | OnSsLoad | OnSsKey | |
| | | Rotate | 10,400 | 620,40 | 128,192,192 | Ready | N/A | | OnRrLoad | OnRrKey | |

ATTRIBUTE VALUE IN NEW EXECUTION ENVIRONMENT

EP 1 988 454 A1

## FIG. 6

### SCREEN TABLE

201

| # | SCREEN | COMPONENT NAME | PARENT | CHILD 1 | CHILD 2 | ... |
|---|--------|----------------|--------|---------|---------|-----|
| 1 | PICTURE FLIPPING SCREEN | Push_Button1 | Picture_Box1 | - | - | |
| | | Push_Button2 | Picture_Box1 | - | - | |
| | | Picture_Box1 | - | Push_Button1 | Push_Button2 | |
| ②̣ | NAME INPUTTING SCREEN | Title_Text1 | - | - | - | |
| | | ◎ InputArea1 | - | - | - | |

◯: CURRENT SCREEN (SCREEN BEING DISPLAYED IN GUI EDITING WINDOW),
◎: COMPONENT IN SELECTED STATE

## FIG. 7

### PROTOTYPE TABLE

204

| # | COMPONENT TYPE | DEFAULT COMPONENT NAME | ATTRIBUTE 1 | | ATTRIBUTE 2 | | ... |
|---|----------------|------------------------|-------------|---------------|---------------|------------------|-----|
| | | | ATTRIBUTE NAME | DEFAULT VALUE | ATTRIBU TE NAME | DEFAULT VALUE | |
| 1 | TEXT | Text1 | FONT | GOTHIC | | | |
| 2 | IMAGE | Image1 | | | | | |
| 3 | BUTTON | Button1 | BORDER THICKNESS | 1 pt | FONT | GOTHIC | |
| 4 | CHECK BOX | CheckBox1 | BORDER THICKNESS | 2 pt | | | |
| | | | | | | | |

EP 1 988 454 A1

## FIG. 8

### RESOURCE TABLE 205

| | RESOURCE ID | MIME TYPE | DATA |
|---|---|---|---|
| 1 | IDS_TITLE1 | Text/plain | "Hello World" |
| 2 | IDS_LABEL1 | Text/plain | "Input your name" |
| 3 | IDS_BUTTON_IMAGE2 | image/jpeg | "button¥image/jpg" |
| | | | |

## FIG. 9

### MATERIAL TABLE 206

| # | MATERIAL ID | PATH | RELATIVE PATH | IMAGE IN MEMORY |
|---|---|---|---|---|
| 1 | IMG_0001 | images¥0001.jpg | | |
| 2 | IMG_0002 | images¥0002.jpg | | |
| | | | | |
| | | | | |

EP 1 988 454 A1

# FIG. 10

Flow of process at start-up of system

# FIG. 11

FLOW OF GUI DESIGN PROCESS

FLOW OF INPUT DATA
FLOW OF OUTPUT DATA

SOURCE FILE

GUI DISPLAY DATA FILE

# FIG. 12

**SOURCE CODE GENERATING SYSTEM** — 50c

## COMPONENT PROTOTYPES — 51c

| A | B | C |
| D | E | F |
| G | H | |

## SCREEN DESIGN — 52c

521c — Title

522c — (house illustration)

523c — Ready

Change execution environment

Check designs which differ among execution environments by preview

Edit values of positions, sizes, attributes, and event actions

## ENVIRONMENT — 54c

| ENVIRONMENT 1 | VGA (480x640) | △ |
| ENVIRONMENT 2 | QVGA(240x320) | ▽ |

| NEW | ADD | DELETE |

## COMPONENT ATTRIBUTES — 55c

| NAME | InputArea |
|---|---|
| POSITION | ( 5, 200 ) |
| SIZE | ( 230, 40 ) |
| COLOR | 128, 192, 192 |
| TEXT | Ready |
| FONT | Bold 9 pt |
| BORDER | Normal |
| ALIGN | Left |
| SOURCE GENERATION | off |

## EVENT ACTIONS — 53c

| LOAD | OnSsLoad |
|---|---|
| CLOSE | - |
| KEY | OnSsKey |
| FOCUS | OnSsFocus |
| TV | - |

| NEW SCREEN — 57c | GENERATE SOURCE — 58c |

56c

| ID_BACKGROUND_IMAGE | Jpeg IMAGE | 24 bit (100x100) | △ | NEW | ADD |
| ID_TITLE_BAR_IMAGE | BMP IMAGE | 24 bit (640x32) | ▽ | DELETE |

EXAMPLE OF SCREEN AFTER EXECUTION ENVIRONMENT SWITCHING

EP 1 988 454 A1

## FIG. 13

SOURCE CODE GENERATING SYSTEM

COMPONENT PROTOTYPES

A  B  C
D  E  F
G  H

EVENT ACTIONS

| LOAD | OnSsLoad |
| CLOSE | - |
| KEY | OnSsKey |
| FOCUS | OnSsFocus |
| TV | - |

SCREEN DESIGN

Title

Inappropriate font size

Since size of image is larger than that of screen, whole image cannot be displayed

Ready

Size of input field is insufficient in layout proportional to screen size

NEW SCREEN     GENERATE SOURCE

ENVIRONMENT 1  VGA (480x640)
ENVIRONMENT 2  QVGA(240x320)

NEW     ADD     DELETE

COMPONENT ATTRIBUTES

| NAME | InputArea |
| POSITION | ( 10, 540 ) |
| SIZE | ( 460, 40 ) |
| COLOR | 128, 192, 192 |
| TEXT | Ready |
| FONT | Bold 16 pt |
| BORDER | Normal |
| ALIGN | Left |
| SOURCE GENERATION | on |

| ID_BACKGROUND_IMAGE | Jpeg IMAGE | 24 bit (100x100) | | NEW | ADD |
| ID_TITLE_BAR_IMAGE | BMP IMAGE | 24 bit (640x32) | | DELETE |

EXAMPLE OF SCREEN AFTER EXECUTION ENVIRONMENT SWITCHING

# FIG. 14

Flow of execution environment switching process

Source code
generating program — 91

Data saved as file — 41

Data in memory — 40

GUI design information file — 4
Resource file — 5
Material data file — 6
Existing design information file — 99

GUI design information file I/O facility — 111
Resource file I/O facility — 112
User interface component providing facility — 105
Resource managing facility — 106

Screen table — 201
Component table — 202
Environment table — 203
Prototype table — 204
Resource table — 205
Material table — 206

Input device — 2
Key input device — 21
Pointing input device — 22

GUI editing facility — 101
Component attribute editing facility — 102
Event action editing facility — 103
Execution environment selecting facility — 104

Preview screen — 301
Result information — 302

Display device — 3

Source code generating facility — 113
GUI display data generating facility — 114

Source code — 303
GUI display data — 304

Source file — 7
GUI display Data file — 8

⟶ Flow of input data
----▶ Flow of output data

# FIG. 15

FLOW OF SOURCE CODE GENERATING PROCESS

# FIG. 16

```
int initialize_screen( int executeEnvironment )
{                                                                    A
    if (executeEnvironment == VGA)
    {
        Title_Text.SetLocation( 10, 10, 460, 40 );
        Title_Text.Text = "LongTitle";
        Title_Text.TextColor = RGB( 0, 255, 0, 0 );                    B
        Title_Text.Picture = new CBitmap( LOADRES("TtLarge"), 0, false );
        Title_Text.setEventHandler("LOAD", "OnLoad");
        Title_Text.setEventHandler("KEY", "OnKey");

        PictureBox.SetLocation( 10, 60, 460, 480 );
        PictureBox.Text = "";
        PictureBox.TextColor = RGB( 0, 0, 0, 0 );                      C
        PictureBox.Picture = new CBitmap( LOADRES("BgLarge"), 0, false );
        PictureBox.setEventHandler("LOAD", "OnLoad");

        InputArea.SetLocation( 10, 540, 460, 40 );
        InputArea.Text = "Ready";
        InputArea.TextColor = RGB( 0, 128, 192, 192 );
        InputArea.setEventHandler("LOAD", "OnLoad");                   D
        InputArea.setEventHandler("KEY", "OnKey");
    }
    else if (executeEnvironment == QVGA)
    {
        Title_Text.SetLocation( 5, 5, 230, 20 );
        Title_Text.Text = "ShortTitle";
        Title_Text.TextColor = RGB( 0, 255, 0, 0 );
        Title_Text.Picture = new CBitmap( LOADRES("TtlSmall"), 0, false );
        Title_Text.setEventHandler("LOAD", "OnSsLoad");
        Title_Text.setEventHandler("KEY", "OnSsKey");

        PictureBox.SetLocation( 5, 30, 230, 140 );
        PictureBox.Text = "";
        PictureBox.TextColor = RGB( 0, 0, 0, 0 );
        PictureBox.Picture = new CBitmap( LOADRES("BgSmall"), 0, false );
        PictureBox.setEventHandler("LOAD", "OnSsLoad");

        InputArea.SetLocation( 5, 200, 230, 40 );
        InputArea.Text = "Ready";
        InputArea.TextColor = RGB( 0, 128, 192, 192 );
        InputArea.setEventHandler("LOAD", "OnSsLoad");
        InputArea.setEventHandler("KEY", "OnSsKey");
    }
}
```

45

EXAMPLE OF SOURCE CODE

# FIG. 17

<span style="float: right;">46</span>

```
<Screen name="Screen 1" Environment="VGA">
   <Widget Type="Label" name="Title_Text"
      Pos="10, 10" Size="460, 40"
      Text="Title"
      TextColor="255, 0, 0"
      Image="LongTtlSmall"
   />
   <Widget Type="Picture" name="PictureBox"
      Pos="10, 60" Size="460, 480"
      Text=""
      TextColor="0, 0, 0"
      Image="BgLarge"
   />
   <Widget Type="Text" name="InputArea"
      Pos="10, 540" Size="460, 40"
      Text="Ready"
      TextColor="128, 192, 192"
   />
</Screen>

<Screen name=" Screen 1" Environment="QVGA">
   <Widget Type="Label" name="Title_Text"
      Pos="5, 5" Size="230, 20"
      Text="ShortTitle"
      TextColor="255, 0, 0"
      Image="TtlSmall"
   />
   <Widget Type="Picture" name="PictureBox"
      Pos="5, 3" Size="230, 140"
      Text=""
      TextColor="0, 0, 0"
      Image="BgSmall"
   />
   <Widget Type="Text" name="InputArea"
      Pos="5, 200" Size="230, 40"
      Text="Ready"
      TextColor="128, 192, 192"
   />
</Screen>
```

EXAMPLE OF GUI DISPLAY DATA

FIG. 18

```
                    ( main() )
                        │
                        ▼
          ┌─────────────────────────┐  ⌐1801
          │        initialize()      │
          └─────────────────────────┘
                        │
                        ▼                          ⌐1802
              ╱───────────────────╲
             ╱   Is user operation  ╲     no
             ╲      received?       ╱───────────────────────────┐
              ╲───────────────────╱                            │
                        │ yes                                    │
                        ▼                          ⌐1803          ⌐1804
              ╱───────────────────╲                   ┌──────────────────────┐
             ╱   Is user operation  ╲    yes          │     new_screen()      │──┐
             ╲   click of "New screen" ╲─────────────▶│                       │  │
              ╲      button?        ╱                 └──────────────────────┘  │
               ╲───────────────────╱                                            │
                        │ no                                                     │
                        ▼                          ⌐1805          ⌐1806           │
              ╱───────────────────╲                   ┌──────────────────────┐   │
             ╱   Is user operation  ╲    yes          │    new_component()    │──┤
             ╲  dragging of component in╲────────────▶│                       │  │
             ╲   "Component providing  ╱               └──────────────────────┘  │
              ╲      window"?       ╱                                            │
               ╲───────────────────╱                                            │
                        │ no                                                     │
                        ▼                          ⌐1807          ⌐1808           │
              ╱───────────────────╲       yes         ┌──────────────────────┐   │
             ╱      Is user         ╲                 │     handle_gui()      │──┤
             ╲ operation press of component in╲──────▶│                       │  │
             ╲   "GUI editing window"?  ╱              └──────────────────────┘  │
               ╲───────────────────╱                                            │
                        │ no                                                     │
                        ▼                          ⌐1809          ⌐1810           │
              ╱───────────────────╲       yes         ┌──────────────────────┐   │
             ╱   Is user operation  ╲                 │   handle_property()   │──┤
             ╲ click within "Component attribute╲────▶│                       │  │
             ╲  displaying window"?  ╱               └──────────────────────┘  │
               ╲───────────────────╱                                            │
                        │ no                                                     │
                        ▼                          ⌐1811          ⌐1812           │
              ╱───────────────────╲       yes         ┌──────────────────────┐   │
             ╱      Is user         ╲                 │    handle_action()    │──┤
             ╲ operation click within "Event editing╲▶│                       │  │
             ╲       window"?       ╱                 └──────────────────────┘  │
               ╲───────────────────╱                                            │
                        │ no                                                     │
                        ▼                          ⌐1813          ⌐1814           │
              ╱───────────────────╲       yes         ┌──────────────────────┐   │
             ╱   Is user operation  ╲                 │   handle_resource()   │──┤
             ╲ click within "Resource managing╲──────▶│                       │  │
             ╲       window"?       ╱                 └──────────────────────┘  │
               ╲───────────────────╱                                            │
                        │ no                                                     │
                        ▼                          ⌐1815          ⌐1816           │
              ╱───────────────────╲       yes         ┌──────────────────────┐   │
             ╱   Is user operation  ╲                 │ handle_environment()  │──┤
             ╲ click within "Execution environment╲──▶│                       │  │
             ╲   selecting window"?  ╱               └──────────────────────┘  │
               ╲───────────────────╱                                            │
                        │ no                                                     │
                        ▼                          ⌐1817          ⌐1818           │
              ╱───────────────────╲       yes         ┌──────────────────────┐   │
             ╱      Is user         ╲                 │   generate_source()   │──┤
             ╲ operation click of "Generate source"╲─▶│                       │  │
             ╲       button?        ╱                 └──────────────────────┘  │
               ╲───────────────────╱                                            │
                        │ no                          ⌐1819                      │
                        ▼                                                        │
              ╱───────────────────╲        no                                    │
             ╱   Is user operation  ╲────────────────────────────────────────────┘
             ╲   ending operation?  ╱
               ╲───────────────────╱
                        │ yes      ⌐1920
                        ▼
                    ( end )
```

# FIG. 19

initialize()

READ GUI DESIGN INFORMATION FILE AND SET CONTENTS OF FOLLOWING TABLES:
- SCREEN TABLE
- COMPONENT TABLE
- ENVIRONMENT TABLE

1901

SET SCREEN AT TOP ENTRY OF SCREEN TABLE AS CURRENT SCREEN

1902

PLACE TOP COMPONENT SUBENTRY OF ENTRY FOR CURRENT SCREEN IN SELECTED STATE

1903

SET EXECUTION ENVIRONMENT AT TOP ENTRY OF ENVIRONMENT TABLE AS CURRENT EXECUTION ENVIRONMENT

1904

READ RESOURCE FILE AND MATERIAL DATA FILE AND SET CONTENTS OF FOLLOWING TABLES:
- RESOURCE TABLE
- MATERIAL TABLE

1905

SET, BASED ON PROGRAMMED PROCESS, CONTENTS OF FOLLOWING TABLE:
- PROTOTYPE TABLE

1906

redraw()

1907

end

1908

FIG. 20

new_screen()

ADD NEW ENTRY TO SCREEN TABLE; ⌐2001

SET THAT ENTRY AS CURRENT SCREEN ⌐2002

redraw() ⌐2003

end ⌐2004

# FIG. 21

```
                     new_component()
```

ARRANGE COMPONENT DRAGGED FROM
COMPONENT PROVIDING WINDOW BY USER
AT POSITION IN GUI EDITING WINDOW TO
WHICH COMPONENT IS DRAGGED — 2101

IS THERE ALREADY
ANY OTHER COMPONENT AT
POSITION AFTER
DRAGGING? — 2102

no

yes

SET PARENT-CHILD RELATIONSHIP WITH
THAT COMPONENT AS PARENT IN SCREEN
TABLE — 2103

ADD ENTRY FOR ADDED COMPONENT TO
SCREEN TABLE
   (SET VALUES OF ATTRIBUTES INCLUDING
POSITION, SIZE, AND COLOR IN ENTRY FOR
EACH OF ENVIRONMENTS SET IN
ENVIRONMENT TABLE) — 2104

PLACE ADDED COMPONENT IN SELECTED
STATE — 2105

redraw() — 2106

end — 2107

FIG. 22

```
                    ┌─────────────────┐
                    │  handle_gui()   │
                    └─────────────────┘
                             │
                             ▼
                    ╱────────────────────╲        2201
            ╱ IS USER OPERATION ╲              yes
          ╱ CLICK OF COMPONENT IN SELECTED ╲─────────────┐
          ╲        STATE?        ╱                        │
            ╲────────────────────╱                        │
                     │ no                                 │
                     ▼                2202                 │
          ┌──────────────────────────────┐                │
          │ PLACE COMPONENT CLICKED BY    │                │
          │ USER IN SELECTED STATE        │                │
          └──────────────────────────────┘                ▼
                     │                        ╱─────────────────────╲    2203
                     │                 ╱  IS CLICKED POSITION  ╲         no
                     │               ╱ AT ONE OF FOUR CORNERS OF ╲──────────┐
                     │               ╲      COMPONENT?       ╱               │
                     │                 ╲─────────────────────╱               │
                     │                            │ yes                      │
       2204          │                            ▼                     2205 │
          ┌──────────────────────┐     ┌──────────────────────────┐         ▼
          │ CHANGE SIZE OF        │     │ MOVE COMPONENT TO        │
          │ COMPONENT SUCH THAT   │     │ DRAGGING END POSITION    │
          │ CORNER FALLS AT       │     └──────────────────────────┘
          │ DRAGGING END POSITION │                 │
          └──────────────────────┘                 │
                     │                              │
                     ▼              2206            │
          ┌──────────────────────────────┐         │
          │ SET NEW POSITION AND SIZE IN  │◄────────┘
          │ CORRESPONDING ENTRY IN        │
          │ COMPONENT TABLE               │
          └──────────────────────────────┘
                     │                2207
                     ▼
          ┌──────────────────────────────┐
          │          redraw()             │
          └──────────────────────────────┘
                     │                2208
                     ▼
                ┌─────────┐
                │   end   │
                └─────────┘
```

# FIG. 23

```
        ( handle_property() )
                 │
                 ▼                        2301
┌─────────────────────────────────────┐
│ SET VALUE KEYED BY USER IN           │
│ ATTRIBUTE VALUE FIELD CLICKED        │
│ BY USER                              │
└─────────────────────────────────────┘
                 │
                 ▼                        2302
┌─────────────────────────────────────┐
│ CHANGE ATTRIBUTE VALUE IN            │
│ ENTRY OF COMPONENT TABLE             │
│ CORRESPONDING TO COMPONENT IN        │
│ SELECTED STATE TO KEYED VALUE        │
└─────────────────────────────────────┘
                 │
                 ▼                        2303
┌─────────────────────────────────────┐
│              redraw()                │
└─────────────────────────────────────┘
                 │
                 ▼           2304
           (    end    )
```

# FIG. 24

```
        ( handle_action() )
                 │
                 ▼                        2401
┌─────────────────────────────────────┐
│ SET VALUE KEYED BY USER IN ACTION    │
│ NAME FIELD CLICKED BY USER           │
└─────────────────────────────────────┘
                 │
                 ▼                        2402
┌─────────────────────────────────────┐
│ CHANGE EVENT ACTION IN ENTRY OF      │
│ COMPONENT TABLE CORRESPONDING TO     │
│ COMPONENT IN SELECTED STATE TO       │
│ KEYED VALUE                          │
└─────────────────────────────────────┘
                 │
                 ▼                        2403
┌─────────────────────────────────────┐
│              redraw()                │
└─────────────────────────────────────┘
                 │
                 ▼           2404
           (    end    )
```

# FIG. 25

```
        ( handle_resource() )
                │
                ▼
```

IS USER OPERATION CLICK OF "NEW" BUTTON? ⟨2501⟩ — yes → ADD NEW ENTRY (CONTAINING NO DATA) TO TOP OF RESOURCE MANAGING WINDOW ⟨2502⟩ → SET CONTENTS OF NEW ENTRY BASED ON CONTENTS KEYED BY USER ⟨2503⟩

no ↓

IS USER OPERATION CLICK OF "ADD" BUTTON? ⟨2504⟩ — yes → CREATE NEW ENTRY IN RESOURCE TABLE ⟨2505⟩ → SET CONTENTS OF TOP ENTRY IN RESOURCE MANAGING WINDOW IN NEW ENTRY ⟨2506⟩

no ↓

IS USER OPERATION CLICK OF ENTRY IN RESOURCE MANAGING WINDOW? ⟨2507⟩ — yes → HIGHLIGHT CLICKED ENTRY ⟨2508⟩

no ↓

IS USER OPERATION CLICK OF "DELETE" BUTTON? ⟨2509⟩ — yes → DELETE HIGHLIGHTED ENTRY IN RESOURCE MANAGING WINDOW ⟨2510⟩ → DELETE CORRESPONDING ENTRY IN RESOURCE TABLE ⟨2511⟩

no ↓

( end ) ⟨2512⟩

## FIG. 26

```
( handle_environment() )
                │
                ▼
        ╱ Is user operation ╲ ──2601── yes ──┐
        ╲ click of "new" button? ╱            │
                │ no                          ▼
                │              ┌──────────────────────────────────┐ 2602
                │              │ Add new entry (containing no data) to top of │
                │              │ execution environment selecting window       │
                │              └──────────────────────────────────┘
                │                             │
                ▼                             ▼
        ╱ Is user operation ╲ ──2604── yes  ┌──────────────────────────────────┐ 2603
        ╲ click of "add" button? ╱──────────│ Set contents of new entry based on contents │
                │ no                         │ keyed by user                     │
                │                            └──────────────────────────────────┘
                │                             │
                │                             ▼
                │              ┌──────────────────────────────────┐ 2605
                │              │ Create new entry in environment table │
                │              └──────────────────────────────────┘
                │                             │
                │                             ▼
                │              ┌──────────────────────────────────┐ 2606
                │              │ Set contents of top entry in execution │
                │              │ environment selecting window in new entry │
                │              └──────────────────────────────────┘
                │                             │
                │                             ▼
                │              ┌──────────────────────────────────┐ 2607
                │              │ Add subentry corresponding to added │
                │              │ environment to entry for each component in │
                │              │ component table and initialize subentry │
                │              └──────────────────────────────────┘
                │                             │
                ▼                             ▼
        ╱ Is user ╲ ──2609──               ┌──────────────────────────────────┐ 2608
        ╱ operation click of entry in ╲ yes │ Set added execution environment as current │
        ╲ execution environment ╱──────────│ execution environment              │
        ╲ selecting window? ╱               └──────────────────────────────────┘
                │ no                          │
                │                             ▼
                │              ┌──────────────────────────────────┐ 2610
                │              │ Highlight clicked entry            │
                │              └──────────────────────────────────┘
                │                             │
                │                             ▼
                │              ┌──────────────────────────────────┐ 2611
                │              │ Set execution environment corresponding to │
                │              │ highlighted entry as current execution environment │
                │              └──────────────────────────────────┘
                ▼
        ╱ Is user ╲ ──2612── yes ──┐
        ╱ operation click of "delete" ╲      │
        ╲ button? ╱                          ▼
                │ no           ┌──────────────────────────────────┐ 2613
                │              │ Delete highlighted entry in execution │
                │              │ environment selecting window       │
                │              └──────────────────────────────────┘
                │                             │
                │                             ▼
                │              ┌──────────────────────────────────┐ 2614
                │              │ Delete corresponding entry in environment table │
                │              └──────────────────────────────────┘
                │                             │
                │                             ▼
                │              ┌──────────────────────────────────┐ 2615
                │              │ Delete subentry corresponding to deleted │
                │              │ environment from entry for each component in │
                │              │ component table                    │
                │              └──────────────────────────────────┘
                │                             │
                │                             ▼
                │              ┌──────────────────────────────────┐ 2616
                │              │ Set execution environment corresponding to top │
                │              │ entry in environment table as current execution │
                │              │ environment                        │
                │              └──────────────────────────────────┘
                │                             │
                │                             ▼
                │              ┌──────────────────────────────────┐ 2617
                │              │ Redraw()                           │
                │              └──────────────────────────────────┘
                │                             │
                ▼                             ▼
         ( end ) ──2618──────────────────────┘
```

FIG. 27

```
            generate_source()
                    │
                    ▼                              ⌐2701
   ┌─────────────────────────────────────────────────────┐
   │  scr = ADDRESS OF TOP ENTRY OF SCREEN TABLE          │
   └─────────────────────────────────────────────────────┘
                    │
    ┌───────────────┤
    │               ▼                    ⌐2702
    │          ◇─────────────────────◇        yes
    │          ◇    IS scr NULL?      ◇────────────┐
    │          ◇─────────────────────◇            │
    │               │ no          ⌐2703           │
    │               ▼                             │
    │   ┌─────────────────────────────┐          │
    │   │  generate_source(scr)        │          │
    │   └─────────────────────────────┘          │
    │               │              ⌐2704          │
    │               ▼                             │
    │   ┌─────────────────────────────┐          │
    │   │  scr = ADDRESS OF NEXT ENTRY │          │
    │   │  OF SCREEN TABLE             │          │
    │   └─────────────────────────────┘          │
    └───────────────┘                             │
                    ▼                  ⌐2705       │
            (        end        )◄───────────────┘
```

## FIG. 28

```
                    ┌──────────────┐
                    │   redraw()   │
                    └──────┬───────┘
                           │
          ┌────────────────▼─────────────────────┐  ⌐2801
          │ preview(CURRENT SCREEN, CURRENT      │
          │ EXECUTION ENVIRONMENT )              │
          └────────────────┬─────────────────────┘
                           │
          ┌────────────────▼─────────────────────┐  ⌐2802
          │ DISPLAY CONTENTS OF RESOURCE TABLE IN│
          │ RESOURCE MANAGING WINDOW ;           │
          └────────────────┬─────────────────────┘
```

**2803** IS THERE ANY COMPONENT IN SELECTED STATE? — no

yes

**2804** DISPLAY CONTENTS OF ENTRY OF COMPONENT TABLE CORRESPONDING TO COMPONENT IN SELECTED STATE IN FOLLOWING WINDOWS:
• COMPONENT ATTRIBUTE DISPLAYING WINDOW
• EVENT EDITING WINDOW

**2805** CLEAR CONTENTS OF FOLLOWING WINDOWS:
• COMPONENT ATTRIBUTE DISPLAYING WINDOW
• EVENT EDITING WINDOW

**2806** DISPLAY CONTENTS OF PROTOTYPE WINDOW IN COMPONENT PROVIDING WINDOW

**2807** DISPLAY CONTENTS OF ENVIRONMENT TABLE IN EXECUTION ENVIRONMENT SELECTING WINDOW

**2808** end

# FIG. 29

generate_source(screen)

env = ADDRESS OF TOP ROW OF ENVIRONMENT TABLE ⌐2901

IS env NULL? ⌐2902
yes
no

GENERATE PIECE OF SOURCE CODE (A IN FIG. 16) "FOR DETERMINING WHETHER CURRENT EXECUTION ENVIRONMENT IS EQUAL TO EXECUTION ENVIRONMENT INDICATED BY env" ⌐2903

rows = ADDRESS OF GROUP OF SUBENTRIES IN SCREEN TABLE FOR SCREEN DESIGNATED BY screen ⌐2904

row = ADDRESS OF TOP ONE OF ROWS INDICATED BY rows ⌐2905

IS row NULL? ⌐2906
yes
no

name = VALUE IN "Component Name" COLUMN OF ROW INDICATED BY row
row2 = ADDRESS OF SUBENTRY WHOSE VALUE IN "Component Name" COLUMN IS EQUAL TO name AND WHOSE VALUE IN "Environment" COLUMN IS EQUAL TO env IN COMPONENT TABLE ⌐2907

(x, y) = VALUE IN "Position" COLUMN OF ROW INDICATED BY row2
(h, w) = VALUE IN "Size" COLUMN OF ROW INDICATED BY row2 ⌐2908

GENERATE PIECE OF SOURCE (B IN FIG. 16) "FOR SETTING POSITION OF COMPONENT INDICATED BY name TO (x, y) AND SIZE TO (h, w)" ⌐2909

AS FOR VALUES OF ATTRIBUTES attr FOR SUBENTRY INDICATED BY row2, GENERATE PIECE OF SOURCE (C IN FIG. 16) "FOR SETTING VALUES OF ATTRIBUTES attr FOR COMPONENT INDICATED BY name TO VALUES DESIGNATED IN SUBENTRY INDICATED BY row2" ⌐2910

AS FOR EVENTS e FOR SUBENTRY INDICATED BY row2, GENERATE PIECE OF SOURCE CODE (D IN FIG. 16) "FOR SETTING EVENT HANDLERS FOR EVENTS e FOR COMPONENT INDICATED BY name TO HANDLERS DESIGNATED IN SUBENTRY INDICATED BY row2" ⌐2911

row = ADDRESS OF ROW NEXT TO ROW INDICATED BY row OF ROWS INDICATED BY rows ⌐2912

env = ADDRESS OF NEXT ROW OF ENVIRONMENT TABLE ⌐2913

end ⌐2914

## FIG. 30

preview(screen, env)

rows = ADDRESS OF GROUP OF SUBENTRIES IN SCREEN TABLE FOR SCREEN DESIGNATED BY screen — 3001

row = ADDRESS OF TOP ONE OF ROWS INDICATED BY rows — 3002

IS row NULL? — 3003

yes

no

name = VALUE IN "Component Name" COLUMN OF ROW INDICATED BY row — 3004

row2 = ADDRESS OF SUBENTRY WHOSE VALUE IN "Component Name" COLUMN IS EQUAL TO name AND WHOSE VALUE IN "Environment" COLUMN IS EQUAL TO env IN COMPONENT TABLE — 3005

DRAW COMPONENT ON PREVIEW SCREEN BASED ON COMPONENT ATTRIBUTE VALUES DESIGNATED IN SUBENTRY INDICATED BY row2 — 3006

rows = ADDRESS OF ROW NEXT TO ROW INDICATED BY row OF ROWS INDICATED BY rows — 3007

end — 3008

# FIG. 31

3101

**ADDRESS BOOK**

TARO
YAMADA
09012345678

CALL

NAME

PHONE NUMBER

E-MAIL

SELECT

## FIG. 32

European Patent
Office

**EUROPEAN SEARCH REPORT**

Application Number

EP 08 15 1726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/097269 A1 (BATCHA THOMAS RUDOLPH [US] ET AL) 25 July 2002 (2002-07-25)<br>* figure 3 *<br>* paragraph [0009] - paragraph [0015] *<br>----- | 1-4 | INV.<br>G06F9/44 |
| A | US 2006/200799 A1 (WILLS ALAN C [GB] ET AL) 7 September 2006 (2006-09-07)<br>* abstract *<br>----- | 1-4 | |
| A | US 2005/177816 A1 (KUDUKOLI RAMPRASAD [US] ET AL) 11 August 2005 (2005-08-11)<br>* abstract *<br>----- | 1-4 | |
| A | US 5 911 070 A (SOLTON RANDOLPH T [US] ET AL) 8 June 1999 (1999-06-08)<br>* abstract *<br>----- | 1-4 | |
| | | | TECHNICAL FIELDS SEARCHED (IPC)<br><br>G06F |

The present search report has been drawn up for all claims

| Place of search | Date of completion of the search | Examiner |
|---|---|---|
| The Hague | 23 September 2008 | Weidmann, Matthias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 15 1726

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2008

| Patent document cited in search report | | Publication date | Patent family member(s) | | Publication date |
|---|---|---|---|---|---|
| US 2002097269 | A1 | 25-07-2002 | US | 2005149909 A1 | 07-07-2005 |
| US 2006200799 | A1 | 07-09-2006 | NONE | | |
| US 2005177816 | A1 | 11-08-2005 | NONE | | |
| US 5911070 | A | 08-06-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10228372 A

- JP 1998 A